# EUROPEAN PATENT SPECIFICATION

(11) **EP 4 449 756 B1**
(45) Date of publication and mention of the grant of the patent: **08.07.2026**
(21) Application number: 21839948.3
(22) Date of filing: 16.12.2021
(51) Int. Cl.: H04W 24/02, H04W 12/08, H04W 48/00, H04W 12/06

(54) **DYNAMIC SECURE NETWORK SLICE ADMISSION CONTROL**
DYNAMISCHE UND SICHERE NETZWERKSCHICHTZULASSUNGSSTEUERUNG
GESTION D'ADMISSION SÉCURISÉE À UNE TRANCHE DE RÉSEAU

(43) Date of publication of application: 23.10.2024
(73) Proprietor: Telefonaktiebolaget LM Ericsson (publ), 164 83 Stockholm (SE)
(72) Inventor: POURZANDI, Makan, Montreal, Québec H4A 2L1 (CA); JARRAYA, Yosr, Montreal, Québec H1Y2G1 (CA); HAKALA, Harri, 20380 TURKU (FI); SMEETS, Bernard, 247 51 DALBY (SE); ARNGREN, Tommy, 954 42 SÖDRA SUNDERBYN (SE)
(74) Representative: Ericsson
(86) International application number: PCT/EP2021/086090
(87) International publication number: WO 2023/110097

(56) References cited:
- WO-A1-2021/203891
- US-A1- 2021 243 600
- KOUTSOS ADRIEN: "The 5G-AKA Authentication Protocol Privacy", 2019 IEEE EUROPEAN SYMPOSIUM ON SECURITY AND PRIVACY (EUROS&P), IEEE, 17 June 2019 (2019-06-17), pages 464 - 479, XP033600729, [retrieved on 20190819], DOI: 10.1109/EUROSP.2019.00041

## Description

### TECHNICAL FIELD

The present disclosure relates in general to a method for authenticating a wireless communications device to a network slice of a communications network, the method being performed by a slice manager, a method performed by a wireless communications device, for authenticating the wireless communications device to a network slice of a communications network, and corresponding slice manager, wireless device and computer program (products).

### BACKGROUND

Network slicing enables the partitioning of multiple virtual networks on a single physical networking infrastructure. A network slice represents an independent virtualized instance defined by allocation of a subset of the available network resources. Typically, network slices are tailored to meet specific requirements of a set of applications and services.

A fundamental challenge with shared infrastructures is to provide traffic isolation and guarantee appropriate resources to fulfil the required service needs. 3GPP TS 23.501 V17.0.0 (2021-03) specifies the network slicing framework to address this challenge where slice identification and selection in the RAN and core network domains is based on the Single Network Slice Selection Assistance Information (S-NSSAI). A 5G network slice is identified by a S-NSSAI value and defined within a PLMN (associated with a PLMN Identifier).

The network, based on local policies, subscription changes and/or UE mobility may change the set of Network Slice(s) to which the UE is registered and provide the UE with a new Registration Area and/or Allowed NSSAI and the mapping of this Allowed NSSAI to HPLMN S-NSSAIs, for each Access Type over which the UE is registered. In addition, the network may provide the UE with Configured NSSAI for the Serving PLMN, the associated mapping information, and the rejected S-NSSAIs.

It is possible according to 3GPP TS 23.501 V17.0.0 (2021-03) in clause 5.15.5.2.2, that the set of Network Slices for a UE can be changed at any time while the UE is registered with a network, and such change may be initiated by the network, or by the UE. Particularly, the network may perform such a change over each Access Type during a Registration procedure or trigger a notification towards the UE of the change of the Network Slices using a UE Configuration Update procedure as specified in TS 23.502 V17.0.0 (2021-03), clause 4.2.4. UE configuration includes the Access and Mobility Management related parameters decided and provided by the AMF and the UE Policy provided by the Policy Control Function, PCF. When the AMF wants to change the UE configuration for access and mobility management related parameters, it initiates the procedure defined in clause 4.2.4.2.

US 2021/243600 A1, disclosing embodiments of a method, device, and system for accessing a network slice.

KOUTSOS ADRIEN, "The 5G-AKA Authentication Protocol Privacy", IEEE, XP033600729, studying the 5G-AKA authentication protocol described in the 5G mobile communication standards, with a focus on privacy concerns.

However, there is a need for an improved handling of authorization of a UE to a network slice.

### SUMMARY

It would be advantageous to achieve solutions overcoming, or at least alleviating, the above-mentioned drawbacks. In particular, it would be desirable to enable dynamic management and authorization of wireless communications devices to a network slice, thereby facilitating for a wireless communications device to join a network slice on-demand. Thus, there is a need for an improved way for a wireless device to securely join a network slice.

By a wireless communications device joining a network slice on-demand it may be meant that the UE is dynamically caused to join a network slice in response to a trigger or event. One example could be that a new network slice is created.

It has been realized that existing solutions do not allow a user to have on-demand access to a network slice. Specifically, there are no solutions for transitioning a device to a dynamically created or on-demand created network slice. It is a challenge to ensure secure and efficient distribution of access keys related to such network slices.

To better address one or more of these concerns, methods and devices as defined in the independent claims are provided. Preferable embodiments are defined in the dependent claims.

According to a first aspect, a method for authenticating a wireless communications device to a network slice of a communications network is provided. The method is performed by a slice manager of the communications network. The wireless communications device has one or more attributes associated with it. At least one of the one or more attributes fulfil an attribute-based access policy of the network slice . The method comprises sending a secret key to the wireless communications device, wherein the secret key is encrypted using attribute-based encryption. The method further comprises sending an encrypted access key to the wireless communications device. The encrypted access key is encrypted using the attribute-based access policy, such that the secret key generated based at least one attribute that fulfils the attribute-based access policy can decrypt the encrypted access key, wherein the network slice is a dynamically created network slice or a temporary network slice.

A network slice may represent an virtualized instance defined by allocation of a subset of available network resources, as defined in 3GPP TS 23.502 v.17.0.0. (2021-03). A network slice may be a temporary network slice, i.e., a network slice created for a limited period of time, or a dynamically created network slice, i.e., a network slice created on-demand (for example in response to an event or trigger).

A slice manager may be any device(s) or function capable of performing an embodiment the method according to the first aspect. For example, the method may be implemented in a network function of the communications network.

The term wireless communications device may be used interchangeably with wireless device. In some examples, a wireless communications device may be called a user equipment, UE. Further examples of a wireless communications device will be described in the detailed description.

An attribute may be any type of property associated with a wireless communications device. As non-limiting examples, meta-data, a token, a credential, a text string, or a key-value pair may be considered an attribute.

An attribute-based access policy may be an access policy controlling access of wireless communications devices to a network slice based on one or more attributes which are associated with the wireless communications devices. An attribute-based access policy may be achieved by an access structure over a set of attributes. In general, an access policy may be defined as requirements that specify what is required in order to access information. In the example of an attribute-based access policy, the requirements are based on attributes, and only wireless devices having certain attributes associated with them may access encrypted information encrypted using or based on the access policy.

The secret key may be generated based on the one or more attributes associated with the wireless communications device such that the secret key may be used to decrypt an access key encrypted using an access policy which the one or more attributes fulfil. As an illustrative example only, an access policy may be a function of attributes and the access policy, and if that function returns true the access policy is considered to be fulfilled or satisfied.

By receiving a secret key generated based on the one or more attributes associated with the wireless communications device, the wireless communications device may decrypt an encrypted access key for the network slice to obtain the access key and subsequently authenticate to the network slice using the access key. In this way, only wireless communications devices having a secret key generated based on one or more attributes that fulfil the attribute-based access policy for the network slice may decrypt the encrypted access key and authenticate to the network slice. This allows for sending, or broadcasting, the encrypted access key to a plurality of wireless communications devices without unintended wireless communications devices (i.e. devices not having an attribute(s) fulfilling the access policy) being able to decrypt the access key and thus authenticate to the network slice. In this way, a plurality of wireless communications devices may be transitioned to a network slice in a secure way.

Further, this decreases the need for a specific configuration update for each wireless communications device that is to be transitioned to a network slice, as the encrypted access key may be distributed to wireless communications devices via broadcast, thus decreasing the communications resources needed. As the respective secret key for each wireless communications device may be distributed some time before the wireless communications device is to be transferred to the network slice, this further decreases the communications resources needed at the time the wireless communications device is to be transferred.

The method facilitates distribution of keys related to network slices.

This may be particularly beneficial in case of an emergency. In emergencies, there is a risk that the communications network gets overloaded as many users may try to use their communications devices at the same time (for example, to find safety or to reach friends and family). This overload may result in that communications are limited. In an emergency, a network slice dedicated to prioritized network traffic may be created to prioritize traffic associated with the first responders. For example, firefighters, police, ambulance personnel, and other first responders may have a prioritized need for their wireless communications devices to work in order to perform their duties. Thus, an emergency network slice may be created, to which the devices of first responders may be transitioned using the solutions described herein. As these solutions may enable transitioning of a plurality of wireless communications devices to a network slice using relatively little communications resources, the wireless communications devices may be transitioned to the network slice even in case of an emergency where the network is of risk at being overloaded.

According to an embodiment, the method may further comprise generating the secret key using the one or more attributes associated with the wireless communication device. By using the one or more attributes associated with the wireless communications device, the secret key may be generated such that it may decrypt an encrypted message encrypted using an access policy which the one or more attributes fulfils.

According to an embodiment, the method may further comprise generating the access key, and encrypting the access key using the attribute-based access policy.

According to an embodiment, the access key may be generated in response to the network slice being created, e.g. generated, configured, setup or made available for use. In an example, the slice manager may receive a notification that the network slice is generated or created, and in response to the notification generate the access key. Generating the access key in response to the network slice being created is advantageous in that the access key may be generated specifically for the network slice.

According to an embodiment, the method may further comprise determining an attribute-based access policy for the network slice. The determination may be based on information received by the slice manager specifying what attributes associated with a wireless communications device should give the associated wireless communications device access to the access key, i.e., be able to decrypt the encrypted access key, and thereby to authenticate to and access the network slice.

According to an embodiment, the method may further comprise receiving a request from the wireless communications device for the secret key. The request may comprise the one or more attributes associated with the wireless communications device.

According to an embodiment, the method may further comprise verifying that the one or more attributes associated with the wireless communications device originate from a trusted application of the wireless communications device. In this way, the slice manager may verify that the attributes are indeed associated with the wireless communications device, thereby decreasing the risk that the wireless communications device receives a secret key based on attributes not associated with it. In other words, the slice manager may verify the one or more attributes associated with the wireless communications device.

According to an embodiment, the method may further comprise generating a secret master key and a corresponding public key for the slice manager, wherein the secret key is generated using the secret master key and the one or more attributes associated with the wireless communications device, and wherein the public key is available to the wireless communications devices.

According to an embodiment, the secret key may be generated using attribute-based encryption. The attribute-based encryption may, for example, be cipher-text attribute-based encryption or key-policy attribute-based encryption.

According to an embodiment, the encrypted access key is encrypted using attribute-based encryption. The attribute-based encryption may, for example, be cipher-text attribute-based encryption or key-policy attribute-based encryption.

By using attribute-based encryption, an encrypted access key may be sent to a plurality of wireless communications devices, and only the wireless communications devices having one or more attributes fulfilling an access policy of the encrypted access key may decrypt it. In this way, an access key may be distributed to a plurality of wireless communications devices in a relatively secure way.

According to an embodiment, the method may further comprise sending a device-specific secret key to each of a plurality of wireless communications devices, each of the plurality of wireless communications devices having one or more attributes associated with it, wherein each device-specific secret key is generated based on the one or more attributes associated with each wireless communications device. The method further comprises sending an encrypted access key to the plurality of wireless communications devices, the encrypted access key being encrypted using the access policy, such that a device-specific secret key generated based on at least one attribute that fulfil the attribute-based access policy can decrypt the encrypted access key.

According to a second aspect, a method performed by a wireless communications device, for authenticating the wireless communications device to a network slice of a communications network is provided. The wireless communications device has one or more attributes associated with it. The at least one of the one or more attributes fulfils an attribute-based access policy of the network slice. The method comprises receiving a secret key generated based on the one or more attributes wherein the secret key is encrypted using attribute-based encryption. The method further comprises receiving an encrypted access key for the network slice. The encrypted access key being encrypted using the attribute-based access policy such that a secret key generated based on at least one attribute that fulfils the attribute-based access policy can decrypt the encrypted access key. The method further comprises decrypting the encrypted access key using the secret key to obtain the access key. The method further comprises authenticating the wireless communications device to the network slice using the access key, wherein the network slice is a dynamically created network slice or a temporary network slice.

In general, all benefits and explanations described with reference to the first aspect and any embodiments of the first aspect apply also for embodiments of the second aspect, and vice versa.

By receiving a secret key generated based on the one or more attributes associated with the wireless communications device, the wireless communications device may decrypt an encrypted access key for the network slice to obtain the access key and thus authenticate to the network slice. In this way, only wireless communications devices having a secret key generated based on one or more attributes that fulfil the attribute-based access policy for the network slice may decrypt the encrypted access key. This allows for sending, or broadcasting, the encrypted access key to a plurality of wireless communications devices without unintended wireless communications devices (i.e. devices not having an attribute(s) fulfilling the access policy) being able to decrypt the access key and thus authenticate to the network slice. In this way, a plurality of wireless communications devices may be transitioned to a network slice in a relatively secure way.

This method may facilitate for transition of a wireless communications device to a network slice. Further, distribution of keys related to network slices are facilitated.

According to an embodiment, the network slice may be a dynamically created network slice or a temporary network slice. By dynamically created it may be meant that the network slice is created in response to an event or a trigger. This could, in some examples, mean that the network slice is created after the wireless communications device has registered to the network. By a temporary network slice, it may be meant a network slice created for a limited time period. For example, a temporary network slice may be an emergency network slice created in response to an emergency, which may benefit from a network slice which network traffic is prioritized.

According to an embodiment, the method may further comprise receiving a notification to authenticate to the network slice and an identifier of the network slice. The notification may, for example, be a request or an invitation to authenticate to the network slice. The identifier may, for example, be comprised in the notification. By receiving a notification to authenticate to the network slice, the wireless communications device may be caused to authenticate to the network slice using the decrypted access key and the identifier. In some examples, the notification may be received by a plurality of wireless communications devices, and in those examples only the wireless communications devices that have been able to decrypt the encrypted access key will be able to decrypt the encrypted access key and subsequently authenticate to, or join, the network slice.

According to an embodiment, the method may further comprise establishing a secure connection with a slice manager of the communications network, wherein the secret key is received from the slice manager using the secure connection. By establishing a secure connection with a slice manager of the communications network, the secret key may be securely received by the wireless communications device.

According to an embodiment, the method may further comprise transmitting the one or more attributes associated with the wireless communications device to a slice manager of the communications network. By transmitting the one or more attributes associated with the wireless communications device, the secret key may be generated based on the transmitted one or more attributes. In some examples, the secret key may be generated by the slice manager.

According to an embodiment, the one or more attributes associated with the wireless communications device may be stored by a trusted entity of the wireless communications device, wherein the trusted entity is trusted by a slice manager of the communications network. In this way, the slice manager may generate the secret key based on attributes originating from a trusted entity, thereby decreasing the risk that the secret key is generated based on incorrect attributes. Since the secret key is generated based on trusted attributes, the risk that a wireless device receives a secret key based on incorrect attributes in decreased, and thus the risk that a wireless device is able to decrypt an access key it shouldn't be able to decrypt is decreased. For example, the attributes may be provisioned on a SIM of the wireless device.

According to an embodiment, the trusted entity comprises an application of the wireless communications device. An application may be any type of software running on the wireless device, such as a trusted device-native application or a trusted downloaded application, or an application accessible to the wireless device, for example over the Internet or over device-to-device communication.

According to an embodiment, the at least one attribute associated with the wireless communications device is indicative of a role associated with a user of the wireless communications device. In this embodiment, the role may be verified via the trusted entity.

According to an embodiment, the at least one attribute associated with the wireless communications device comprises a position of the wireless communications device. In this embodiment, the position may be verified via the trusted entity.

According to an embodiment, the encrypted access key is encrypted using attribute-based encryption.

According to a third aspect, a slice manager for authentication of a first wireless communications device to a network slice is provided. The slice manager comprises a processor, and a memory coupled to the processor, wherein the memory stores instructions that when executed by the processor causes the processor to perform operations according to an embodiment of the method according to the first aspect.

According to a fourth aspect, a computer program product is provided. The computer program product comprises a non-transitory computer readable storage medium comprising computer readable instructions embodied in the medium that when executed by a processor of a slice manager causes the processor to perform operations according to any of the methods of the first aspect.

According to a fifth aspect, a wireless communications device for authenticating to a network slice of a communications network is provided. The wireless communications device comprises a processor; and a memory coupled to the processor, wherein the memory stores instructions that when executed by the processor cause the processor to perform operations according to any of the methods of the second aspect.

According to a sixth aspect, a computer program product is provided. The computer program product comprises a non-transitory computer readable storage medium comprising computer readable instructions embodied in the medium that when executed by a processor of a wireless communications device causes the processor to perform operations according to any of the methods of the second aspect.

According to a seventh aspect, a computer program comprising instructions which, when the program is executed by a computer, cause the computer to carry out the steps of any of the methods of the first aspect and the second aspect.

According to an eight aspect, a method implemented in a communication system including a host computer, a base station and a wireless communications device is provided. The method comprises at the host computer, providing user data, and at the host computer, initiating a transmission carrying the user data to the wireless communications device via a network slice, wherein the wireless communications device has been authenticated to the network slice using any of the methods of the second aspect.

According to an embodiment, the method further comprises at the wireless communications device, receiving the user data from the base station.

According to a ninth aspect, a communication system including a host computer is provided. The communication system comprises processing circuitry configured to provide user data, and a communication interface configured to forward user data to a wireless network for transmission to a wireless communications device authenticated to a network slice, wherein the wireless communications device comprises a radio interface and processing circuitry, the processing circuitry configured to authenticate the wireless communications device to the network slice using any of the methods of the second aspect.

According to an embodiment, the communication system further includes the wireless communications device.

According to an embodiment, the cellular network further includes a base station configured to communicate with the wireless communications device.

According to an embodiment, the processing circuitry of the host computer is configured to execute a host application providing the user data, and the processing circuitry of the wireless communications device is configured to execute a client application associated with the host application and receiving or requesting the user data via the client application.

Further advantages and features of the present disclosure will become apparent upon reading the following detailed description in view of the drawings briefly described below.

### BRIEF DESCRIPTION OF THE DRAWINGS

Figures 1A-1B illustrate various aspects of an exemplary 5G network architecture.
Figure 2 illustrates an exemplary signal flow diagram that illustrates a relationship between primary authentication and network-slice-specific authentication and authorization (NSSAA).
Figure 3 illustrates a system implementing a method for authenticating a wireless device to a network slice according to some embodiments.
Figure 4 illustrates a method for authenticating a wireless device to a network slice according to some embodiments.
Figure 5 illustrates a method for authenticating a wireless device to a network slice using an attribute associated with the wireless device according to some embodiments.
Figure 6 illustrates a method for authenticating a wireless device to a network slice using a position attribute associated with the wireless device according to some embodiments.
Figure 7 illustrates a method for authenticating a wireless device to a network slice using an access key according to some embodiments.
Figure 8 illustrates a method for authenticating a wireless device to a network slice according to some embodiments.
Figure 9 is a flow diagram of a method for a slice manager.
Figure 10 is a flow diagram of a method for a wireless communications device.
Figure 11 is a block diagram of elements of a wireless communications device that are configured according to some embodiments.
Figure 12 is a block diagram of elements of a slice manager that are configured according to some embodiments.
Figure 13 illustrates a wireless network, according to various exemplary embodiments of the present disclosure.
Figure 14 shows an exemplary embodiment of a UE, in accordance with various aspects described herein.
Figure 15 is a block diagram illustrating an exemplary virtualization environment usable for implementation of various embodiments of network nodes or NFs described herein.
Figures 16-17 are block diagrams of various exemplary communication systems and/or networks, according to various exemplary embodiments of the present disclosure.
Figures 18-21 are flow diagrams of exemplary methods (e.g., procedures) for transmission and/or reception of user data, according to various exemplary embodiments of the present disclosure.

### DETAILED DESCRIPTION

Exemplary embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features and advantages of the disclosed embodiments will be apparent from the following description.

Furthermore, the following terms are used throughout the description given below:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e*.*g*., a New Radio (NR) base station (gNB) in a 3GPP Fifth Generation (5G) NR network or an enhanced or evolved Node B (eNB) in a 3GPP LTE network), base station distributed components (*e*.*g*., CU and DU), a high-power or macro base station, a low-power base station (*e*.*g*., micro, pico, femto, or home base station, or the like), an integrated access backhaul (IAB) node (or component thereof such as MT or DU), a transmission point, a remote radio unit (RRU or RRH), and a relay node.
- Core Network Node: As used herein, a "core network node" is any type of node in a core network. Some examples of a core network node include, *e*.*g*., a Mobility Management Entity (MME), a serving gateway (SGW), a Packet Data Network Gateway (P-GW), etc. A core network node can also be a node that implements a particular core network function (NF), such as an access and mobility management function (AMF), a session management function (AMF), a user plane function (UPF), a Service Capability Exposure Function (SCEF), or the like.
- Wireless Device: As used herein, a "wireless device" or "wireless communications device" ("WD" for short) is any type of device that has access to (*i*.*e*., is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, mobile terminals (MTs), *etc.*
- Radio Node: As used herein, a "radio node" can be either a "radio access node" (or equivalent term) or a "wireless device."
- Network Node: As used herein, a "network node" is any node that is either part of the radio access network (*e*.*g*., a radio access node or equivalent term) or of the core network (*e*.*g*., a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e*.*g*., administration) in the cellular communications network.
- Node: As used herein, the term "node" (without any prefix) can be any type of node that is capable of operating in or with a wireless network (including a RAN and/or a core network), including a radio access node (or equivalent term), core network node, or wireless device.
- Service: As used herein, the term "service" refers generally to a set of data, associated with one or more applications, that is to be transferred via a network with certain specific delivery requirements that need to be fulfilled in order to make the applications successful.
- Component: As used herein, the term "component" refers generally to any component needed for the delivery of a service. Examples of component are RANs (*e*.*g*., E-UTRAN, NG-RAN, or portions thereof such as eNBs, gNBs, base stations (BS), *etc*.), CNs (*e*.*g*., EPC, 5GC, or portions thereof, including all type of links between RAN and CN entities), and cloud infrastructure with related resources such as computation, storage. In general, each component can have a "manager", which is an entity that can collect historical information about utilization of resources as well as provide information about the current and the predicted future availability of resources associated with that component (*e*.*g*., a RAN manager).

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

At a high level, the 5G System (5GS) consists of an Access Network (AN) and a Core Network (CN). The AN provides UEs connectivity to the CN, e.g., via base stations such as gNBs or ng-eNBs described below. The CN includes a variety of Network Functions (NF) that provide a wide range of different functionalities such as session management, connection management, charging, authentication, etc.

Communication links between the UE and a 5G network (AN and CN) can be grouped in two different strata. The UE communicates with the CN over the Non-Access Stratum (NAS), and with the AN over the Access Stratum (AS). All the NAS communication takes place between the UE and the AMF via the NAS protocol. Security for the communications over this these strata is provided by the NAS protocol (for NAS) and PDCP (for AS).

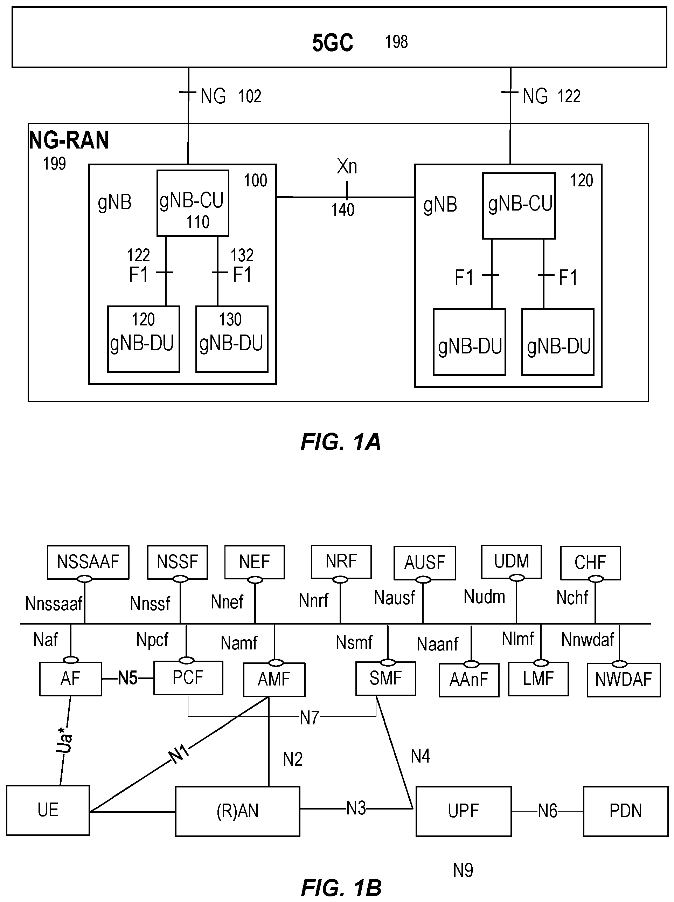

Figure 1A illustrates a high-level view of an exemplary 5G network architecture, consisting of a Next Generation RAN (NG-RAN) 199 and a 5G Core (5GC) 198. NG-RAN 199 can include one or more gNodeB's (gNBs) connected to the 5GC via one or more NG interfaces, such as gNBs 100, 150 connected via interfaces 102, 152, respectively. More specifically, gNBs 100, 150 can be connected to one or more Access and Mobility Management Functions (AMFs) in the 5GC 198 via respective NG-C interfaces. Similarly, gNBs 100, 150 can be connected to one or more User Plane Functions (UPFs) in 5GC 198 via respective NG-U interfaces. Various other network functions (NFs) can be included in the 5GC 198, as described in more detail below.

In addition, the gNBs can be connected to each other via one or more Xn interfaces, such as Xn interface 140 between gNBs 100 and 150. The radio technology for the NG-RAN is often referred to as "New Radio" (NR). With respect the NR interface to UEs, each of the gNBs can support frequency division duplexing (FDD), time division duplexing (TDD), or a combination thereof. Each of the gNBs can serve a geographic coverage area including one more cells and, in some cases, can also use various directional beams to provide coverage in the respective cells.

NG-RAN 199 is layered into a Radio Network Layer (RNL) and a Transport Network Layer (TNL). The NG-RAN architecture, *i*.*e*., the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region" which is defined in 3GPP TS 23.501 (v15.5.0). If security protection for CP and UP data on TNL of NG-RAN interfaces is supported, NDS/IP (3GPP TS 33.401 (v15.8.0) shall be applied.

The NG RAN logical nodes shown in Figure 1A (and described in 3GPP TS 38.401 (v15.6.0) and 3GPP TR 38.801 (v14.0.0) include a Central Unit (CU or gNB-CU) and one or more Distributed Units (DU or gNB-DU). For example, gNB 100 includes gNB-CU 110 and gNB-DUs 120 and 130. CUs (*e*.*g*., gNB-CU 110) are logical nodes that host higher-layer protocols and perform various gNB functions such controlling the operation of DUs. A DU (*e*.*g*., gNB-DUs 120, 130) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (*e*.*g*., for communication), and power supply circuitry.

A gNB-CU connects to one or more gNB-DUs over respective F1 logical interfaces, such as interfaces 122 and 132 shown in Figure 1A. However, a gNB-DU can be connected to only a single gNB-CU. The gNB-CU and connected gNB-DU(s) are only visible to other gNBs and the 5GC as a gNB. In other words, the F1 interface is not visible beyond gNB-CU.

Another change in 5GS (e.g., in 5GC) is that traditional peer-to-peer interfaces and protocols found in earlier-generation networks are modified and/or replaced by a Service Based Architecture (SBA) in which Network Functions (NFs) provide one or more services to one or more service consumers. This can be done, for example, by Hyper Text Transfer Protocol/Representational State Transfer (HTTP/REST) application programming interfaces (APIs). In general, the various services are self-contained functionalities that can be changed and modified in an isolated manner without affecting other services. This SBA model also adopts principles like modularity, reusability, and self-containment of NFs, which can enable deployments to take advantage of the latest virtualization and software technologies.

The services in 5GC can be stateless, such that the business logic and data context are separated. For example, the services can store their context externally in a proprietary database. This can facilitate various cloud infrastructure features like auto-scaling or auto-healing. Furthermore, 5GC services can be composed of various "service operations", which are more granular divisions of overall service functionality. The interactions between service consumers and producers can be of the type "request/response" or "subscribe/notify".

Figure 1B shows an exemplary non-roaming 5G reference architecture with service-based interfaces and various 3GPP-defined NFs within the Control Plane (CP). These include the following NFs, with additional details provided for those most relevant to the present disclosure:
- Application Function (AF, with Naf interface) interacts with the 5GC to provision information to the network operator and to subscribe to certain events happening in operator's network. An AF offers applications for which service is delivered in a different layer (i.e., transport layer) than the one in which the service has been requested (i.e., signaling layer), the control of flow resources according to what has been negotiated with the network. An AF communicates dynamic session information to PCF (via N5 interface), including description of media to be delivered by transport layer.
- Policy Control Function (PCF, with Npcf interface) supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.

- User Plane Function (UPF)- supports handling of user plane traffic based on the rules received from SMF, including packet inspection and different enforcement actions (e.g., event detection and reporting). UPFs communicate with the RAN (e.g., NG-RNA) via the N3 reference point, with SMFs (discussed below) via the N4 reference point, and with an external packet data network (PDN) via the N6 reference point. The N9 reference point is for communication between two UPFs.
   - Session Management Function (SMF, with Nsmf interface) interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
   - Charging Function (CHF, with Nchf interface) is responsible for converged online charging and offline charging functionalities. It provides quota management (for online charging), re-authorization triggers, rating conditions, etc. and is notified about usage reports from the SMF. Quota management involves granting a specific number of units (e.g., bytes, seconds) for a service. CHF also interacts with billing systems.
- Access and Mobility Management Function (AMF, with Namf interface) terminates the RAN CP interface and handles all mobility and connection management of UEs (similar to MME in EPC). AMFs communicate with UEs via the N1 reference point and with the RAN (e.g., NG-RAN) via the N2 reference point. An AMF may be co-located with a Security Anchor Function (SEAF, not shown) that holds a root (or anchor) key for a visited network.
   - Network Exposure Function (NEF) with Nnef interface - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF) with Nnrf interface - provides service registration and discovery, enabling NFs to identify appropriate services available from other NFs.
   - Network Slice Selection Function (NSSF) with Nnssf interface - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Network Slice Specific Authentication and Authorization Function (NSSAAF) supports network slice-specific authentication and authorization with a AAA Server (AAA-S). If the AAA-S belongs to a third party, the NSSAAF may contact the AAA-S via a AAA proxy (AAA-P).
   - Authentication Server Function (AUSF) with Nausf interface - based in a user's home network (HPLMN), it performs user authentication and computes security key materials for various purposes.
   - Network Data Analytics Function (NWDAF) with Nnwdaf interface - provides network analytics information (e.g., statistical information of past events and/or predictive information) to other NFs on a network slice instance level.
   - Location Management Function (LMF) with Nlmf interface - supports various functions related to determination of UE locations, including location determination (in some examples called position) for a UE and obtaining any of the following: DL location measurements or a location estimate from the UE; UL location measurements from the NG RAN; and non-UE associated assistance data from the NG RAN.

The Unified Data Management (UDM) function supports generation of 3GPP authentication credentials, user identification handling, access authorization based on subscription data, and other subscriber-related functions. To provide this functionality, the UDM uses subscription data (including authentication data) stored in the 5GC unified data repository (UDR). In addition to the UDM, the UDR supports storage and retrieval of policy data by the PCF, as well as storage and retrieval of application data by NEF.

The UDM may include, or be co-located with, an Authentication Credential Repository and Processing Function (ARPF) that stores long-term security credentials for subscribers. The UDM may also include, or be co-located with, a Subscription Identifier De-concealing Function (SIDF) that maps between different subscriber identifiers.

The NRF allows every NF to discover the services offered by other NFs, and Data Storage Functions (DSF) allow every NF to store its context. In addition, the NEF provides exposure of capabilities and events of the 5GC to AFs within and outside of the 5GC. For example, NEF provides a service that allows an AF to provision specific subscription data (e.g., expected UE behavior) for various UEs.

As mentioned above, 3GPP Rel-16 introduces a new AKMA feature that is based on 3GPP user credentials in 5G, including the IoT use case. More specifically, AKMA leverages the user's AKA credentials to bootstrap security between the UE and an AF, which allows the UE to securely exchange data with an application server. The AKMA architecture can be considered an evolution of Generic Bootstrapping Architecture (GBA) specified for 5GC in Rel-15 and is further specified in 3GPP TS 33.535 (v.16.2.0).

In addition to the NEF, AUSF, and AF shown in Figure 1B and described above, AKMA also utilizes an anchor function for authentication and key management for applications (AAnF). This function is shown in Figure 1B with Naanf interface. In general, AAnF interacts with AUSFs and maintains UE AKMA contexts to be used for subsequent bootstrapping requests, e.g., by application functions. At a high level, AAnF is similar to a bootstrapping server function (BSF) defined for Rel-15 GBA.

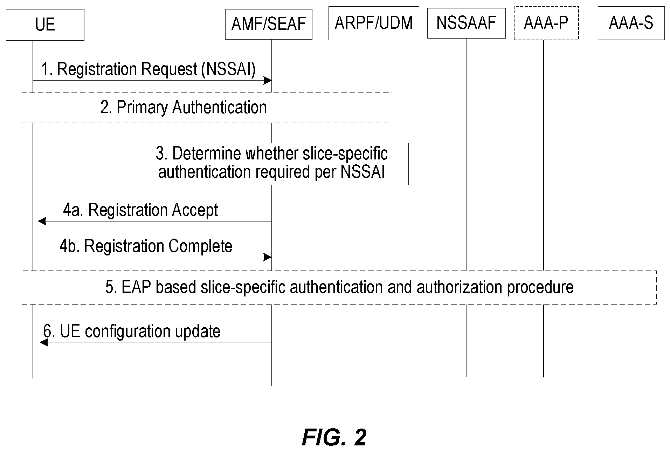

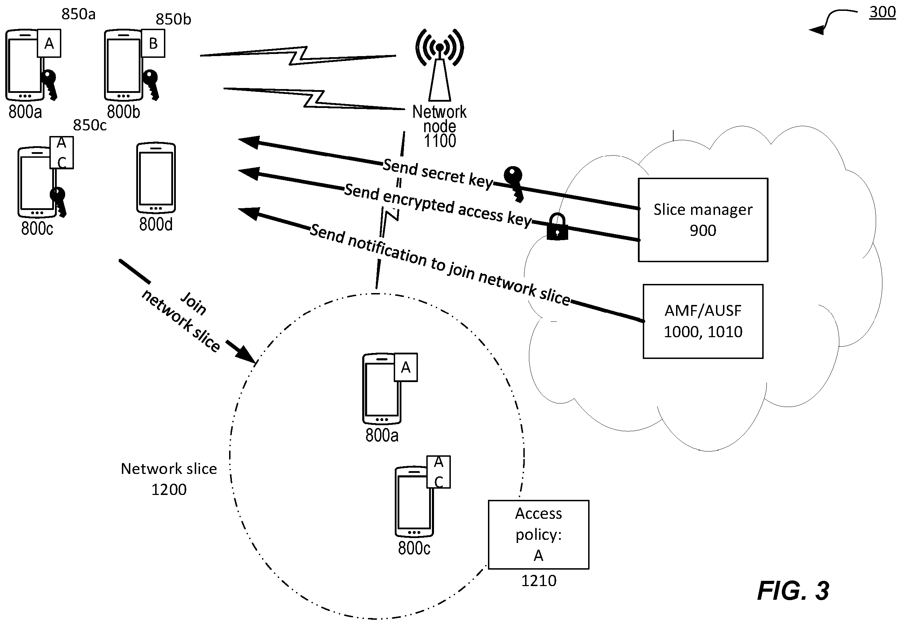

As mentioned above, 3GPP has introduced a dedicated procedure called network slice-specific authentication and authorization (NSSAA) to authenticate and authorize the UE when it requests access to a specific network slice identified by an S-NSSAI. Figure 2 shows an exemplary signal flow diagram that illustrates a relationship between primary authentication and NSSAA. In particular, Figure 2 shows signaling between a UE, an AMF/SEAF, an ARPF/UDM, an NSSAAFR, an AAA-S, and (optionally) an AAA proxy (AAA-P). The procedure shown in Figure 3 is further defined in 3GPP TS 23.501 (v16.8.0) section 5.15.10, 3GPP TS 23.502 (v16.8.0) section 4.2.9, and 3GPP TS 33.501 (v16.5.0) section 16.

In operation 1, the UE sends a registration request including an NSSAI to the AMF/SEAF. In operation 2, the UE, AMF/SEAF, and ARPF/UDM perform a primary authentication of the UE. In operation 3, the AMF/SEAF determines if the network slice identified by NSSAI requires a slice-specific authentication of the UE. In operation 4, the AMF/SEAF sends a registration accept message to the UE, which responds with a registration complete message. In operation 5, the UE and AAA-S run an EAP-based authentication via AMF (EAP Authenticator) and NSSAAF (service defined in TS 29.526). In operation 6, the AMF/SEAF sends a UE configuration update message to the UE after completing of the NSSAA. Although not shown in Figure 2, the AAA-S may request the NSSAA Re-authentication or revocation for an S-NSSAI which had been previously successfully authenticated/authorized.

After a successful or unsuccessful NSSAA procedure, the AMF retains the authentication and authorization status for the UE (in the UE context) for the specific S-NSSAI of the HPLMN while the UE remains RM-REGISTERED in the PLMN. In this manner, the AMF is not required to execute a new NSSAA procedure for the UE at every Periodic Registration Update or Mobility Registration procedure between UE and PLMN. The NSSAA status of each S-NSSAI, if any is stored, is also transferred between AMFs as part of the UE context when the AMF changes.

Figure 3 shows an overview of a system 300 implementing a method for authenticating a wireless device to a network slice according to some embodiments.

The system 300 comprises a plurality of wireless communications devices 800a, 800b, 800c, 800d. The communications devices are registered to a communications network, for example via a network node 1100. In some examples the wireless communications device 800a, 800b, 800c, 800d may be registered to or authenticated to a network slice, for example by using the method described with reference to Figure 2. In the example with the network slice, it is not necessary that the communications devices are all authenticated to the same network slice. It is a sufficient prerequisite that the communications devices 800a, 800b, 800c, 800d can reach the slice manager 900.

Each wireless communications device 800 may have one or more attributes 850a, 850b, 850c associated with them. In this example wireless communications device 800a has attribute A 850a associated with it, the wireless communications device 800b has attribute B 850b associated with it, the wireless communications device 800c has attributes A and C 850c associated with it, and wireless communications device 800d has no attribute associated with it.

An attribute may, for example, be any type of property associated with a wireless communications device. As non-limiting examples, meta-data, a token, a credential, a text string, a tag, an identifier, a location of the wireless communications device, a position of the wireless communications device, or a key-value pair may be considered an attribute. An attribute may, for example, be indicative of a role of a user of the wireless communications device, or a position of the wireless communications device.

In the communications network there is a network slice 1200. The network slice may have been dynamically created or may be considered a temporary network slice, i.e. a network slice created to be used for a limited amount of time. The network slice as an access policy 1210 associated with it. In this example the access policy requires that the wireless communications devices should be associated with the attribute A. That is, any wireless communications device that should be able to decrypt the encrypted access key, and thereby authenticating to the network slice, must have, at least, the attribute A associated with it.

It is assumed in this example that the wireless communications device 800a, 800b, 800c, 800d are be registered to the communications network, but none of them are yet authenticated to the network slice.

The slice manager 900 may send a respective secret key to some or all of the wireless communications devices 800a, 800b, 800c, 800d. The sending may be performed independently to each wireless communications device, for example in response to a request from the wireless communications device. A secret key for a wireless communications device may be generated based on the one or more attributes associated with the wireless communications device. In this example wireless communications devices 800a, 800b and 800c have received a respective secret key, in Figure 3 indicated by the key symbol. The secret key for device 800a has been generated based on attribute 850a A, and the secret key for device 800b has been generated based on attribute 850b B, and the secret key for device 800c has been generated based on attribute 850c A and C. Wireless communications device 800c, which has no attribute associated with it, has not received a secret key. Alternatively, the wireless communications device 800c may receive a key generated based on no attributes.

In order to enable the desired wireless communications devices 800a, 800c having attribute A to join the network slice 1200, the slice manager 900 sends an encrypted access key for the network slice 1200. The encrypted access key has been encrypted based on the access policy 1210 associated with the network slice 1200, such that only a secret key generated based on one or more attributes that fulfil or satisfies the access policy can decrypt the access key. In this example, since the access policy 1210 requires the attribute A, only wireless devices 800a and 800c can decrypt the encrypted access key using their respective secret keys.

The access key may be encrypted using attribute-based encryption (ABE). The access key may be encrypted using a public key or public parameters associated with the slice manager and the access policy.

The respective secret keys may be generated using attribute-based encryption. The secret key for a wireless communications device may be generated based on a master key associated with the slice manager and the attributes associated with the wireless communications device.

For example, key-policy attribute-based encryption (KP-ABE) or ciphertext-policy attribute-based encryption (CP-ABE) may be used.

In order to cause the wireless communications devices 800a, 800b, 800c, 800d to attempt to join or authenticate to the network slice 1200, a network function, such as an AMF or AUSF may send a notification to the wireless communications devices to authenticate to the network slice 1200. The notification may alternatively be sent to the wireless communications devices from another server or function.

The notification may comprise information needed for the wireless communications devices to request to join the network slice, such as information identifying the network slice, for example an identifier, such as a NSSAI.

The wireless communications device may, in response to the notification to join the network slice, attempt to join the network slice. Since only wireless communications devices 800a and 800c are able to decrypt the access key, these are the only wireless communications devices that can successfully authenticate to the network slice.

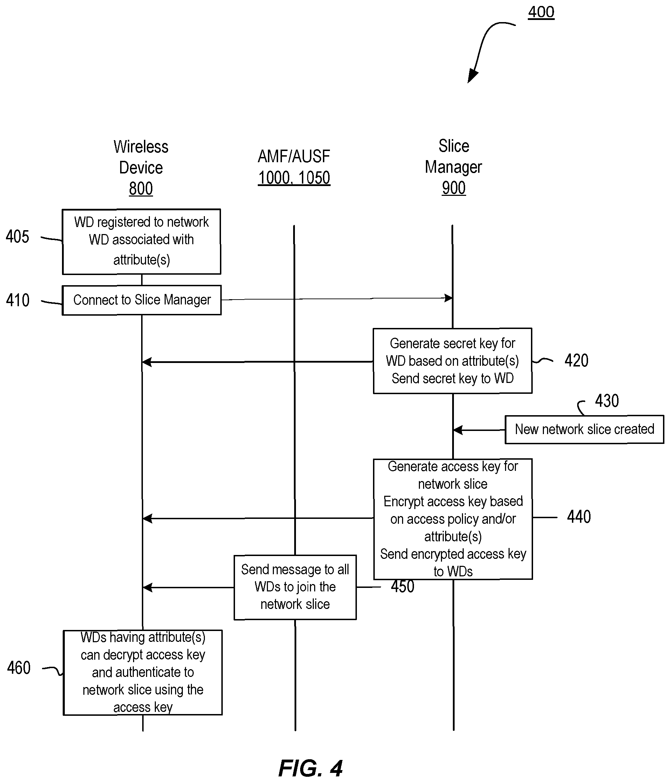

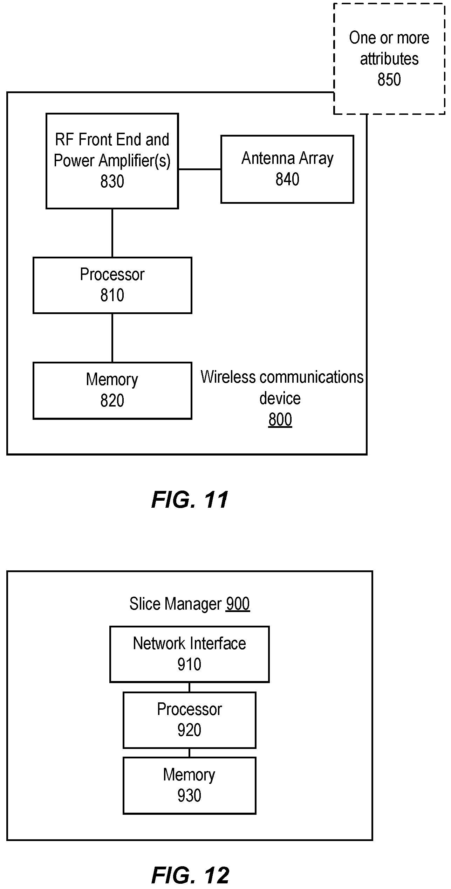

Figure 4 shows a method 400 for authenticating a wireless device 800 to a network slice according to some embodiments. Figure 4 shows a wireless device 800, also called a wireless communications device, an AMF/AUSF 1000, 1050 and a slice manager 900. Specifics of the wireless device 800 and the slice manager 900 will be described with reference to Figures 11 and 12.

The wireless communications device, denoted WD in Figure 4, may be registered 405 to a communications network. The wireless communications device has one or more attributes associated 405 with it, as will be described with reference to Figure 11.

In step 410 the wireless communications device establishes a connection 410 with the slice manager 900. This connection could be initiated by either the wireless communications device 800, the slice manager 900 or by another function in the network. The connection between the wireless communications device 800 and the slice manager 900 may be a secure connection. As a non-limiting example, the secure connection may be a TLS connection.

In step 420 the slice manager 900 generates or obtains a secret key for the wireless device 800. The secret key is based on the one or more attributes associated with the wireless communications device. The one or more attributes may in some examples be received by the slice manager 900 from the wireless device 800. In other examples the one or more attributes are available to the slice manager 900 from a server (for example through an API), a network function or stored locally to the slice manager. After the secret key has been generated, the slice manager 900 transmits the secret key to the wireless device, for example, over the secure connection.

In step 430 the slice manager receives a notification indicating that a network slice has been created. The notification may be received from a network function of the communications network or from an operator of the network. In response to the network slice being created by an operator, the operator may notify the slice manager 900 of a created network slice and optionally indicate to the slice manager 900 that one or more wireless devices 800 are to be transferred to the created network slice. The notification may comprise information needed for the slice manager to generate or obtain an access key for the network slice and information related to an access policy of the network slice. Such information may, for example, be an IP address of a service provider or server where the slice manager can access the access key, an access policy, information identifying a group of wireless devices that should be transferred, a role of users of a wireless device that should be transferred, or a capability). The information may correspond to the attributes of wireless communications devices that the operator or a service provider of the network slice wishes to transfer to the created network slice, for example, "wireless devices having attribute A".

In response to the notification received in step 430, the slice manager may obtain an access key for the network slice, for example, by generating the access key or by receiving it in association with the notification. In any event, the slice manager encrypts the access key based on an attribute-based access policy for the network slice. The slice manager 900 then sends the encrypted access key to a plurality of wireless communications device, including the wireless communications device 800. The plurality of wireless communications device may, for example, be wireless communications devices connected to the slice manager, wireless communications devices registered or authenticated to a first network slice, different from the created network slice, wireless communications devices in a specific geographical area, or any other group of wireless communications devices.

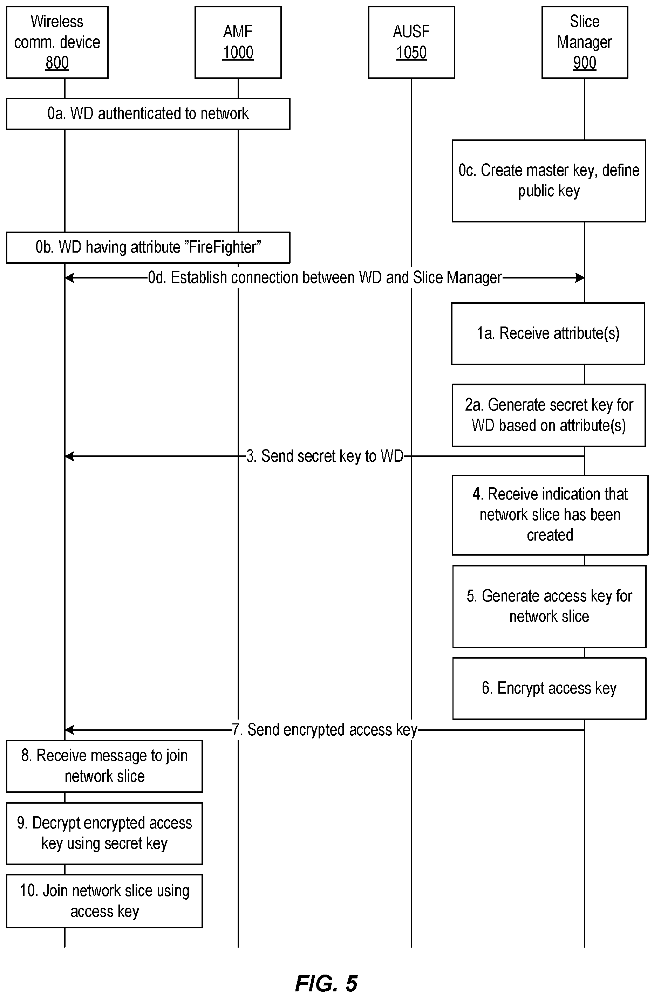

The AMF 1000 or AUSF 1050 may also have been notified of the created network slice and may send a notification or message to the wireless device 800 to request to join the network slice. The notification or message may comprise the information needed for the wireless device 800 to request to join the network slice. The steps for joining the network slice may, for example, be the ones shown in Figure 5, Figure 6 or Figure 7.

In step 460, the wireless communications device 800 decrypts the encrypted access key, given that the one or more attributes associated with the wireless communications device 800 fulfil the access policy. The wireless communications device 800 may then use the decrypted access key and the information received in the notification or message from the AUSF/AMF and request to join the network slice (for example, as described with reference to Figure 5, Figure 6 or Figure 7).

Figure 5 shows a method for authenticating a wireless communications device 800 to a network slice using an attribute associated with the wireless device 800 according to some embodiments. In steps 0a and 0b the wireless communications device 800 is authenticated to or registered to a communications network. The communications network could, for example, be a 5G network, or another type of communications network. The wireless communications device has one or more attributes associated with it in step 0b. In this example the attribute associated with the wireless communications device is the attribute "Firefighter". The attribute, "Firefighter", is in this example considered to be indicative of a role of a user of the wireless device. In step 0c, the slice manager creates a master key for the slice manager and defines a public key associated with it. In step 0d a connection is established between the slice manager 900 and the wireless communications device 800. The establishment may be initiated either from the slice manager 900, the wireless communications device 800 or by another entity or service, such as a network function in the communications network or an application server.

In step 2a the slice manager 900 generates a secret key for the wireless communications device 800 based on the one or more attributes associated with the wireless communications device, in this example "Firefighter". The one or more attributes could be received by the slice manager from another entity or function, such as from the wireless communications device 800 or a network function in the communications network in step 1a. In some examples, the slice manager 900 may determine or associate the attributes to the wireless communications device in step 1a.

In step 3 the slice manager 900 sends the secret key to the wireless communications device 800. The secret key may, for example, be sent over the connection established in step 0d. In any event, the secret key should be sent securely to the wireless communications device, and the person skilled in the art is aware of methods for secure transfer of a secret key.

In step 4 the slice manager 900 receives an indication that an access key for a network slice is to be distributed, for example in response to that the network slice has been created. In step 5 the slice manager 900 generates an access key for the network slice. In other examples, the slice manager 900 may instead obtain the access key from a key generator accessible to the slice manager 900. In step 5, the slice manager 900 encrypts the access key. The access key may be encrypted using an access policy of the network slice, such that only a secret key generated based on one or more attributes that fulfil or satisfies the access policy can decrypt the encrypted access key to obtain the access key. In this example, the access key may be encrypted using a policy defining that only wireless devices having the attribute "firefighters" should be able to decrypt the encrypted access key.

The encrypted access key is sent by the slice manager 900 to one or more wireless devices 800 in step 7. The encrypted access key is received by the wireless device 800 in step 7.

The wireless device 800 receives a message to join a network slice in step 8. The message could alternatively be called a notification. The message or notification may be received from, for example, an AMF 1000 of the communications network, or from another entity or function. The message or notification may be received by a plurality of wireless communications devices, regardless of the attributes associated with each of them.

In step 9, a wireless device 800 having a secret key generated based on one or more attributes that fulfil or satisfies the access policy of the network slice decrypts the encrypted access key to obtain the access key.

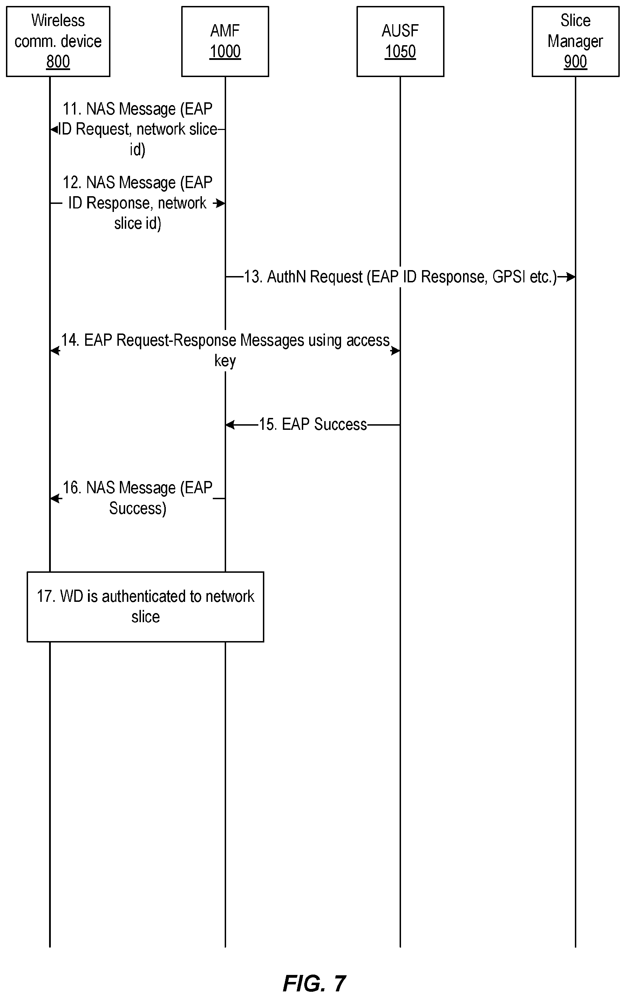

In step 10, the wireless device 800 having the access key can join the network slice by authenticating to the network slice using the access key, for example, as will be described with reference to Figure 7.

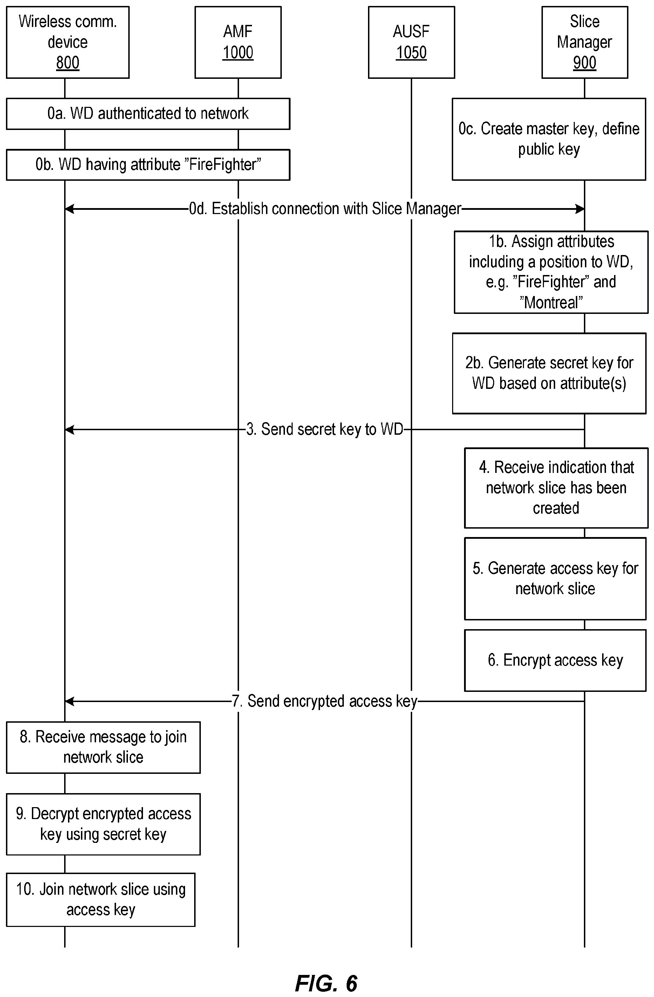

Figure 6 shows a method for authenticating a wireless communications device to a network slice using a position attribute associated with the wireless communications device according to some embodiments. The method shown in Figure 6 is similar to the method described with reference to Figure 5, and the method of Figure 6 may comprise steps from the method of Figure 5, and vice versa. Since the method of Figure 6 comprise many of the same steps as the method described with reference to Figure 5, only differences will be described.

In step 1b the slice manager 900 may assign, i.e. associate, attributes to a wireless communications device. In this example, the attributes comprise a position of the wireless communications device. The position could, for example, be obtained from a network function, such as LMF, of the communications network to which the wireless communications device 800 is registered, or it could be obtained from the wireless communications device 800, for example from a trusted application of the wireless communications device. In this example, the slice manager also associates the attribute "Firefighter" with the wireless communications device. In step 2b the slice manager generates a secret key for the wireless communications device 800 based on the attributes, similarly to step 2a of the method described with reference to Figure 5.

Figure 7 shows a method for authenticating a wireless device to a network slice using an access key according to some embodiments. The access key may be obtained by any of the methods described with reference to Figures 3, 4, 5, or 6. The method described with reference is an exemplary authentication method. Other methods may be used for authentication a wireless communications device to a network slice using an access key. The method described below with reference to Figure 7 may, for example, be used for step 10 of Figures 5 and 6.

In step 11, the AMF 1000 sends a message, for example a NAS Message, to a plurality of wireless communications devices, including the wireless communications device 800 with an indication to join a network slice. The message could, for example, be sent to all or almost all wireless communications devices in a location. The message may further comprise an identifier of the network slice. The identifier may, for example, be a NSSAI.

In step 12, the wireless device 800 sends a response message, for example a NAS Message to the AMF to join the network slice.

In step 13, the AMF sends an authentication request, for example a AuthN Request to an AAA server of the communications network. In some examples, the slice manager may implement AAA functionality for the network slice (see for example 3GPP TR 33.813 V16.0.0 (2020-07)).

In step 14 the wireless communications device 800 authenticates to the AUSF using the access key.

In step 15, upon successful authentication of the wireless device, the AUSF sends a message, such as a EAP success message, to the AMF for the wireless device.

In step 16, a success message, for example a NAS Message EAP Success, is sent to the wireless communications device from the AMF. Thus, the wireless communications device is successfully authenticated and authorized to join the temporary network, step 17.

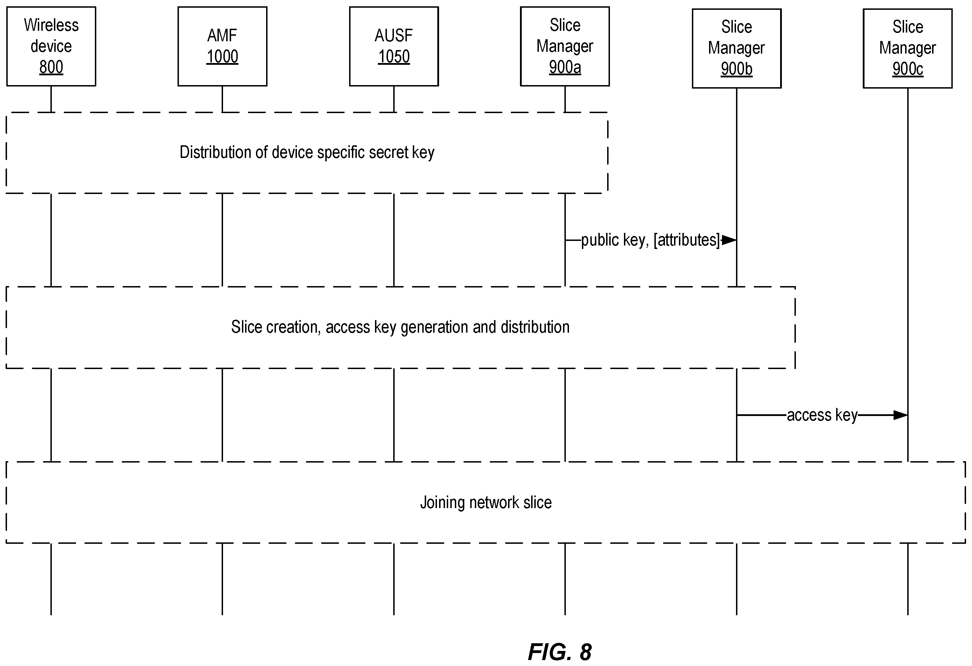

According to some embodiment, the slice manager may be distributed over a plurality of entities, the different entities together may be operative to implement embodiments of the slice manager as described herein in a collaborative manner. An example is shown in Figure 8. In the example shown in Figure 8, the distribution of the device specific secret key, i.e. steps 0-3 as described above with reference to Figures 5 and 6, is performed with a first slice manager 900a. The first slice manager then sends the necessary parameters, for example the public key, to a second slice manager 900b. In some examples, the attributes of the access policy are accessible to the first slice manager, and in those examples the attributes or an access policy may be sent from the first slice manager 900a to the second slice manager 900b.

The notification of the creation of the network slice may be received by the second slice manager 900b, which may then generate an access key, encrypt the access key, and send the access key to one or more wireless devices 800. This corresponds to steps 4-7 as described above with reference to Figures 5 and 6.

The second slice manager 900b may transmit the access key to a third slice manager 900c, which may be included in the steps for authenticating a wireless device to a network slice. In other words, it may be included in the steps for a wireless device to join the network slice. This may correspond to steps 8 or 10 described with reference to Figures 5 and 6, or to some of the steps described with reference to Figure 7.

In a specific example where the network slice is used as an emergency network slice, the following setup could be used. In the examples with "firefighters" as described above with reference to Figures 5 and 6, the first slice manager 900a could be connected with a fire station and receiving information of an emergency. The first slice manager 900a then creates a secret key for a wireless device associated with the attribute "firefighter" and sends the public parameters to a second slice manager. The second slice manager could, for example, be a unit on the emergency location belonging to an operator, set up during or before the emergency. The second slice manger 900b creates an access key for a network slice and encrypts it using the public key and an access policy for the network slice. The encrypted access key is then sent to a plurality of wireless communications device 800. The second slice manager 900b then sends the access key to a third slice manager 900c. The third slice manager could be an identity provider in the operator's network. The third slice manager could then be used during authentication of wireless communications device. In this way, a group of wireless communications devices associated with firefighters, or other emergency personnel, could be transitioned to an emergency network slice (which network traffic could be prioritized over other network traffic in an area).

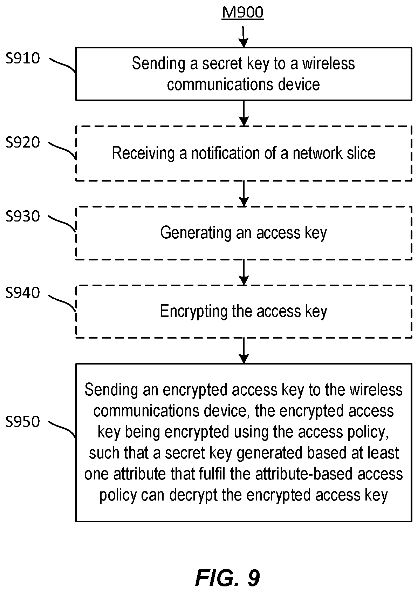

Figure 9 is a flow diagram of a method M900 performed by a slice manager according to an embodiment. The method M900 comprises sending S910 secret key to a wireless communications device and sending S950 an encrypted access key to the wireless communications device, the encrypted access key being encrypted using the access policy, such that a secret key generated based at least one attribute that fulfil the attribute-based access policy can decrypt the encrypted access key. Optionally, the method further comprises receiving S920 a notification of a created network slice. The method M900 may further comprise generating S930 the access key. The method may further comprise encrypting S940 the access key. The method shown in Figure 9 is an overview of the method and further details are disclosed in embodiments of the methods described herein, for examples with reference to Figures 4-8.

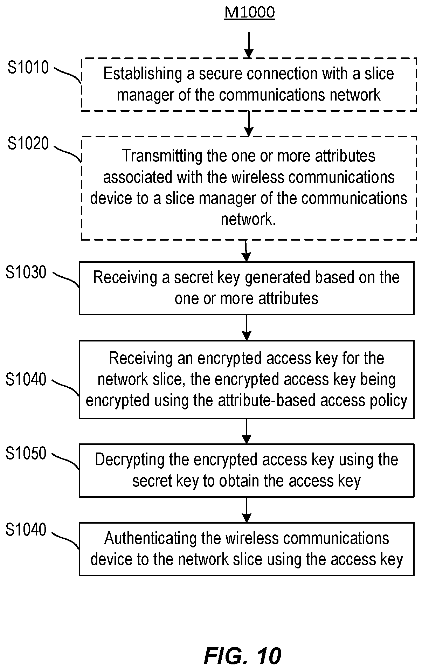

Figure 10 is a flow diagram of a method M1000 performed by a wireless communications device according to some embodiments. The method comprises receiving S1030 a secret key generated based on one or more attributes associated with the wireless communications device and receiving S1040 an encrypted access key for the network slice, the encrypted access key being encrypted using the attribute-based access policy. The method further comprises decrypting S1050 the encrypted access key using the secret key to obtain the access key and authenticating S1040 the wireless communications device to the network slice using the access key. Optionally, the method may further comprise stablishing S1010 a secure connection with a slice manager of a communications network and transmitting S1020 the one or more attributes associated with the wireless communications device to a slice manager of the communications network. The flow chart shown in Figure 10 is an overview of the method and further details are disclosed in embodiments of the methods described herein, for examples with reference to Figures 4-8.

Figure 11 is a block diagram of elements of a wireless communications device 800 according to some embodiments. The wireless communications device in this example has a processor 810, a memory 820, an RF front end, a transceiver, a modem or similar, and power amplifier(s) 830 and an antenna 840. The wireless communications device 800 may, for example, be a smart phone, a tablet, a wearable device, or another communications device capable of transmitting and receiving data wirelessly. Further examples of a wireless communications device are described above. Generally, the communications device is capable of authenticating or being registered to a communications network.

The wireless communications device 800 may have one or more attributes associated with it. The wireless communications device 800 may have a trusted device-native application or a trusted downloaded application that can be used for storing the associated attributes and/or for performing parts of the method. **In** some examples the wireless communications device 800 may retrieve the associated attributes from a server, such as from a cloud service or an **API** or a server. **In** some examples the wireless communications device 800 may retrieve the associated attributes via device-to-device communications. **In** other embodiments the attributes associated with the wireless communications device 800 are not accessible to the wireless communications device but are handled by an application or function elsewhere.

**In** the example where the one or more attributes comprise a position of the device, the position may, for example, be obtained from the communications network or from a positioning function of the wireless communication device.

Figure 12 is a block diagram of elements of a slice manager that are configured according to some embodiments. The slice manager comprises a network interface 910, a processor 920 and a memory 930, and is configured to perform at least a subset of the steps of the methods described herein.

The slice manager may, for example, be implemented in one or more physical devices, in one or more functions of a communications network, or in one or more application servers.

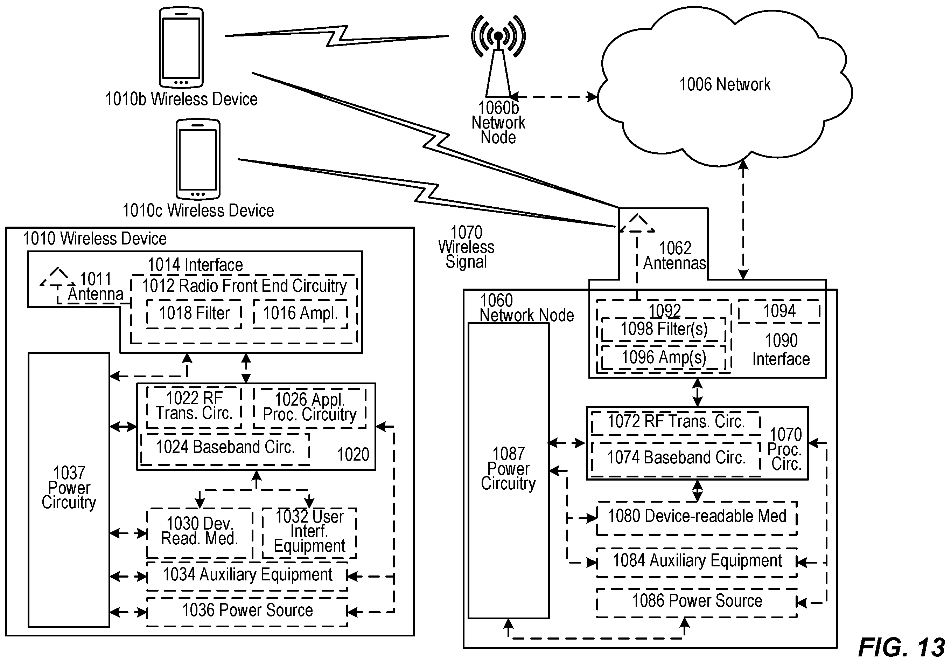

Although the subject matter described herein can be implemented in any appropriate type of system using any suitable components, the embodiments disclosed herein are described in relation to a wireless network, such as the example wireless network illustrated in Figure 13. For simplicity, the wireless network of Figure 13 only depicts network 1006, network nodes 1060 and 1060b, and WDs 1010, 1010b, and 1010c. In practice, a wireless network can further include any additional elements suitable to support communication between wireless devices or between a wireless device and another communication device, such as a landline telephone, a service provider, or any other network node or end device. Of the illustrated components, network node 1060 and wireless device (WD) 1010 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1006 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1060 and WD 1010 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes include, but are not limited to, access points (APs) (*e*.*g*., radio access points), base stations (BSs) (*e*.*g*., radio base stations, Node Bs, evolved Node Bs (eNBs) and NR NodeBs (gNBs)). Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

Further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (*e*.*g*., MSCs, MMEs), O&M nodes, OSS nodes, SON nodes, positioning nodes (*e*.*g*., E-SMLCs), and/or MDTs. As another example, a network node can be a virtual network node as described in more detail below. More generally, however, network nodes can represent any suitable device (or group of devices) capable, configured, arranged, and/or operable to enable and/or provide a wireless device with access to the wireless network or to provide some service to a wireless device that has accessed the wireless network.

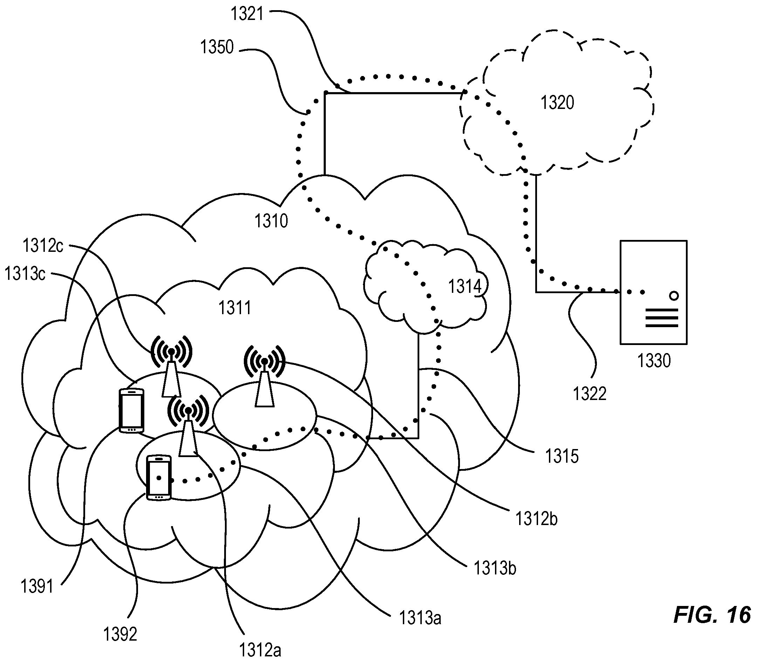

In Figure 13, network node 1060 includes processing circuitry 1070, device readable medium 1080, interface 1090, auxiliary equipment 1084, power source 1086, power circuitry 1087, and antenna 1062. Although network node 1060 illustrated in the example wireless network of Figure 16 can represent a device that includes the illustrated combination of hardware components, other embodiments can comprise network nodes with different combinations of components. It is to be understood that a network node comprises any suitable combination of hardware and/or software needed to perform the tasks, features, functions, and methods and/or procedures disclosed herein. Moreover, while the components of network node 1060 are depicted as single boxes located within a larger box, or nested within multiple boxes, in practice, a network node can comprise multiple different physical components that make up a single illustrated component (*e*.*g*., device readable medium 1080 can comprise multiple separate hard drives as well as multiple RAM modules).

Similarly, network node 1060 can be composed of multiple physically separate components (*e*.*g*., a NodeB component and an RNC component, or a BTS component and a BSC component, *etc*.), which can each have their own respective components. In certain scenarios in which network node 1060 comprises multiple separate components (*e*.*g*., BTS and BSC components), one or more of the separate components can be shared among several network nodes. For example, a single RNC can control multiple NodeB's. In such a scenario, each unique NodeB and RNC pair, can in some instances be considered a single separate network node. In some embodiments, network node 1060 can be configured to support multiple radio access technologies (RATs). In such embodiments, some components can be duplicated (*e*.*g*., separate device readable medium 1080 for the different RATs) and some components can be reused (*e*.*g*., the same antenna 1062 can be shared by the RATs). Network node 1060 can also include multiple sets of the various illustrated components for different wireless technologies integrated into network node 1060, such as, for example, GSM, WCDMA, LTE, NR, WiFi, or Bluetooth wireless technologies. These wireless technologies can be integrated into the same or different chip or set of chips and other components within network node 1060.

Processing circuitry 1070 can be configured to perform any determining, calculating, or similar operations (*e*.*g*., certain obtaining operations) described herein as being provided by a network node. These operations performed by processing circuitry 1070 can include processing information obtained by processing circuitry 1070 by, for example, converting the obtained information into other information, comparing the obtained information or converted information to information stored in the network node, and/or performing one or more operations based on the obtained information or converted information, and as a result of said processing making a determination.

Processing circuitry 1070 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide various functionality of network node 1060, either alone or in conjunction with other network node 1060 components (e.g., device readable medium 1080). Such functionality can include any of the various wireless features, functions, or benefits discussed herein.

For example, processing circuitry 1070 can execute instructions stored in device readable medium 1080 or in memory within processing circuitry 1070. In some embodiments, processing circuitry 1070 can include a system on a chip (SOC). As a more specific example, instructions (also referred to as a computer program product) stored in medium 1080 can include instructions that, when executed by processing circuitry 1070, can configure network node 1060 to perform operations corresponding to various exemplary methods (e.g., procedures) described herein.

In some embodiments, processing circuitry 1070 can include one or more of radio frequency (RF) transceiver circuitry 1072 and baseband processing circuitry 1074. In some embodiments, radio frequency (RF) transceiver circuitry 1072 and baseband processing circuitry 1074 can be on separate chips (or sets of chips), boards, or units, such as radio units and digital units. In alternative embodiments, part or all of RF transceiver circuitry 1072 and baseband processing circuitry 1074 can be on the same chip or set of chips, boards, or units.

In certain embodiments, some or all of the functionality described herein as being provided by a network node, base station, eNB or other such network device can be performed by processing circuitry 1070 executing instructions stored on device readable medium 1080 or memory within processing circuitry 1070. In alternative embodiments, some or all of the functionality can be provided by processing circuitry 1070 without executing instructions stored on a separate or discrete device readable medium, such as in a hard-wired manner. In any of those embodiments, whether executing instructions stored on a device readable storage medium or not, processing circuitry 1070 can be configured to perform the described functionality. The benefits provided by such functionality are not limited to processing circuitry 1070 alone or to other components of network node 1060 but are enjoyed by network node 1060 as a whole, and/or by end users and the wireless network generally.

Device readable medium 1080 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 1070. Device readable medium 1080 can store any suitable instructions, data or information, including a computer program, software, an application including one or more of logic, rules, code, tables, *etc.* and/or other instructions capable of being executed by processing circuitry 1070 and, utilized by network node 1060. Device readable medium 1080 can be used to store any calculations made by processing circuitry 1070 and/or any data received via interface 1090. In some embodiments, processing circuitry 1070 and device readable medium 1080 can be considered to be integrated.

Interface 1090 is used in the wired or wireless communication of signaling and/or data between network node 1060, network 1006, and/or WDs 1010. As illustrated, interface 1090 comprises port(s)/terminal(s) 1094 to send and receive data, for example to and from network 1006 over a wired connection. Interface 1090 also includes radio front end circuitry 1092 that can be coupled to, or in certain embodiments a part of, antenna 1062. Radio front end circuitry 1092 comprises filters 1098 and amplifiers 1096. Radio front end circuitry 1092 can be connected to antenna 1062 and processing circuitry 1070. Radio front end circuitry can be configured to condition signals communicated between antenna 1062 and processing circuitry 1070. Radio front end circuitry 1092 can receive digital data that is to be sent out to other network nodes or WDs via a wireless connection. Radio front end circuitry 1092 can convert the digital data into a radio signal having the appropriate channel and bandwidth parameters using a combination of filters 1098 and/or amplifiers 1096. The radio signal can then be transmitted via antenna 1062. Similarly, when receiving data, antenna 1062 can collect radio signals which are then converted into digital data by radio front end circuitry 1092. The digital data can be passed to processing circuitry 1070. In other embodiments, the interface can comprise different components and/or different combinations of components.

In certain alternative embodiments, network node 1060 may not include separate radio front end circuitry 1092, instead, processing circuitry 1070 can comprise radio front end circuitry and can be connected to antenna 1062 without separate radio front end circuitry 1092. Similarly, in some embodiments, all or some of RF transceiver circuitry 1072 can be considered a part of interface 1090. In still other embodiments, interface 1090 can include one or more ports or terminals 1094, radio front end circuitry 1092, and RF transceiver circuitry 1072, as part of a radio unit (not shown), and interface 1090 can communicate with baseband processing circuitry 1074, which is part of a digital unit (not shown).

Antenna 1062 can include one or more antennas, or antenna arrays, configured to send and/or receive wireless signals. Antenna 1062 can be coupled to radio front end circuitry 1090 and can be any type of antenna capable of transmitting and receiving data and/or signals wirelessly. In some embodiments, antenna 1062 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line of sight antenna used to transmit/receive radio signals in a relatively straight line. In some instances, the use of more than one antenna can be referred to as MIMO. In certain embodiments, antenna 1062 can be separate from network node 1060 and can be connectable to network node 1060 through an interface or port.

Antenna 1062, interface 1090, and/or processing circuitry 1070 can be configured to perform any receiving operations and/or certain obtaining operations described herein as being performed by a network node. Any information, data and/or signals can be received from a wireless device, another network node and/or any other network equipment. Similarly, antenna 1062, interface 1090, and/or processing circuitry 1070 can be configured to perform any transmitting operations described herein as being performed by a network node. Any information, data and/or signals can be transmitted to a wireless device, another network node and/or any other network equipment.

Power circuitry 1087 can comprise, or be coupled to, power management circuitry and can be configured to supply the components of network node 1060 with power for performing the functionality described herein. Power circuitry 1087 can receive power from power source 1086. Power source 1086 and/or power circuitry 1087 can be configured to provide power to the various components of network node 1060 in a form suitable for the respective components (*e*.*g*., at a voltage and current level needed for each respective component). Power source 1086 can either be included in, or external to, power circuitry 1087 and/or network node 1060. For example, network node 1060 can be connectable to an external power source (*e*.*g*., an electricity outlet) via an input circuitry or interface such as an electrical cable, whereby the external power source supplies power to power circuitry 1087. As a further example, power source 1086 can comprise a source of power in the form of a battery or battery pack which is connected to, or integrated in, power circuitry 1087. The battery can provide backup power should the external power source fail. Other types of power sources, such as photovoltaic devices, can also be used.

Alternative embodiments of network node 1060 can include additional components beyond those shown in Figure 13 that can be responsible for providing certain aspects of the network node's functionality, including any of the functionality described herein and/or any functionality necessary to support the subject matter described herein. For example, network node 1060 can include user interface equipment to allow and/or facilitate input of information into network node 1060 and to allow and/or facilitate output of information from network node 1060. This can allow and/or facilitate a user to perform diagnostic, maintenance, repair, and other administrative functions for network node 1060.

Furthermore, various network functions (NFs, e.g., UDM, AAnF, AUSF, etc.) described herein can be implemented with and/or hosted by different variants of network node 1060, including those variants described above.

In some embodiments, a wireless device (WD, *e*.*g*., WD 1010) can be configured to transmit and/or receive information without direct human interaction. For instance, a WD can be designed to transmit information to a network on a predetermined schedule, when triggered by an internal or external event, or in response to requests from the network. Examples of a WD include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*

A WD can support device-to-device (D2D) communication, for example by implementing a 3GPP standard for sidelink communication, vehicle-to-vehicle (V2V), vehicle-to-infrastructure (V2I), vehicle-to-everything (V2X) and can in this case be referred to as a D2D communication device. As yet another specific example, in an Internet of Things (IoT) scenario, a WD can represent a machine or other device that performs monitoring and/or measurements and transmits the results of such monitoring and/or measurements to another WD and/or a network node. The WD can in this case be a machine-to-machine (M2M) device, which can in a 3GPP context be referred to as an MTC device. As one particular example, the WD can be a UE implementing the 3GPP narrow band internet of things (NB-IoT) standard. Particular examples of such machines or devices are sensors, metering devices such as power meters, industrial machinery, or home or personal appliances (*e*.*g*., refrigerators, televisions, *etc*.) personal wearables (*e*.*g*., watches, fitness trackers, *etc*.). In other scenarios, a WD can represent a vehicle or other equipment that is capable of monitoring and/or reporting on its operational status or other functions associated with its operation. A WD as described above can represent the endpoint of a wireless connection, in which case the device can be referred to as a wireless terminal. Furthermore, a WD as described above can be mobile, in which case it can also be referred to as a mobile device or a mobile terminal.

As illustrated, wireless device 1010 includes antenna 1011, interface 1014, processing circuitry 1020, device readable medium 1030, user interface equipment 1032, auxiliary equipment 1034, power source 1036 and power circuitry 1037. WD 1010 can include multiple sets of one or more of the illustrated components for different wireless technologies supported by WD 1010, such as, for example, GSM, WCDMA, LTE, NR, WiFi, WiMAX, or Bluetooth wireless technologies, just to mention a few. These wireless technologies can be integrated into the same or different chips or set of chips as other components within WD 1010.

Antenna 1011 can include one or more antennas or antenna arrays, configured to send and/or receive wireless signals, and is connected to interface 1014. In certain alternative embodiments, antenna 1011 can be separate from WD 1010 and be connectable to WD 1010 through an interface or port. Antenna 1011, interface 1014, and/or processing circuitry 1020 can be configured to perform any receiving or transmitting operations described herein as being performed by a WD. Any information, data and/or signals can be received from a network node and/or another WD. In some embodiments, radio front end circuitry and/or antenna 1011 can be considered an interface.

As illustrated, interface 1014 comprises radio front end circuitry 1012 and antenna 1011. Radio front end circuitry 1012 comprise one or more filters 1018 and amplifiers 1016. Radio front end circuitry 1014 is connected to antenna 1011 and processing circuitry 1020 and can be configured to condition signals communicated between antenna 1011 and processing circuitry 1020. Radio front end circuitry 1012 can be coupled to or a part of antenna 1011. In some embodiments, WD 1010 may not include separate radio front end circuitry 1012; rather, processing circuitry 1020 can comprise radio front end circuitry and can be connected to antenna 1011. Similarly, in some embodiments, some or all of RF transceiver circuitry 1022 can be considered a part of interface 1014. Radio front end circuitry 1012 can receive digital data that is to be sent out to other network nodes or WDs via a wireless connection. Radio front end circuitry 1012 can convert the digital data into a radio signal having the appropriate channel and bandwidth parameters using a combination of filters 1018 and/or amplifiers 1016. The radio signal can then be transmitted via antenna 1011. Similarly, when receiving data, antenna 1011 can collect radio signals which are then converted into digital data by radio front end circuitry 1012. The digital data can be passed to processing circuitry 1020. In other embodiments, the interface can comprise different components and/or different combinations of components.

Processing circuitry 1020 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide WD 1010 functionality either alone or in combination with other WD 1010 components, such as device readable medium 1030. Such functionality can include any of the various wireless features or benefits discussed herein.

For example, processing circuitry 1020 can execute instructions stored in device readable medium 1030 or in memory within processing circuitry 1020 to provide the functionality disclosed herein. More specifically, instructions (also referred to as a computer program product) stored in medium 1030 can include instructions that, when executed by processor 1020, can configure wireless device 1010 to perform operations corresponding to various exemplary methods (e.g., procedures) described herein.

As illustrated, processing circuitry 1020 includes one or more of RF transceiver circuitry 1022, baseband processing circuitry 1024, and application processing circuitry 1026. In other embodiments, the processing circuitry can comprise different components and/or different combinations of components. In certain embodiments processing circuitry 1020 of WD 1010 can comprise a SOC. In some embodiments, RF transceiver circuitry 1022, baseband processing circuitry 1024, and application processing circuitry 1026 can be on separate chips or sets of chips. In alternative embodiments, part or all of baseband processing circuitry 1024 and application processing circuitry 1026 can be combined into one chip or set of chips, and RF transceiver circuitry 1022 can be on a separate chip or set of chips. In still alternative embodiments, part or all of RF transceiver circuitry 1022 and baseband processing circuitry 1024 can be on the same chip or set of chips, and application processing circuitry 1026 can be on a separate chip or set of chips. In yet other alternative embodiments, part or all of RF transceiver circuitry 1022, baseband processing circuitry 1024, and application processing circuitry 1026 can be combined in the same chip or set of chips. In some embodiments, RF transceiver circuitry 1022 can be a part of interface 1014. RF transceiver circuitry 1022 can condition RF signals for processing circuitry 1020.

In certain embodiments, some or all of the functionality described herein as being performed by a WD can be provided by processing circuitry 1020 executing instructions stored on device readable medium 1030, which in certain embodiments can be a computer-readable storage medium. In alternative embodiments, some or all of the functionality can be provided by processing circuitry 1020 without executing instructions stored on a separate or discrete device readable storage medium, such as in a hard-wired manner. In any of those particular embodiments, whether executing instructions stored on a device readable storage medium or not, processing circuitry 1020 can be configured to perform the described functionality. The benefits provided by such functionality are not limited to processing circuitry 1020 alone or to other components of WD 1010, but are enjoyed by WD 1010 as a whole, and/or by end users and the wireless network generally.

Processing circuitry 1020 can be configured to perform any determining, calculating, or similar operations (*e*.*g*., certain obtaining operations) described herein as being performed by a WD. These operations, as performed by processing circuitry 1020, can include processing information obtained by processing circuitry 1020 by, for example, converting the obtained information into other information, comparing the obtained information or converted information to information stored by WD 1010, and/or performing one or more operations based on the obtained information or converted information, and as a result of said processing making a determination.

Device readable medium 1030 can be operable to store a computer program, software, an application including one or more of logic, rules, code, tables, *etc*. and/or other instructions capable of being executed by processing circuitry 1020. Device readable medium 1030 can include computer memory (*e*.*g*., Random Access Memory (RAM) or Read Only Memory (ROM)), mass storage media (*e*.*g*., a hard disk), removable storage media (*e*.*g*., a Compact Disk (CD) or a Digital Video Disk (DVD)), and/or any other volatile or non-volatile, non-transitory device readable and/or computer executable memory devices that store information, data, and/or instructions that can be used by processing circuitry 1020. In some embodiments, processing circuitry 1020 and device readable medium 1030 can be considered to be integrated.

User interface equipment 1032 can include components that allow and/or facilitate a human user to interact with WD 1010. Such interaction can be of many forms, such as visual, audial, tactile, *etc*. User interface equipment 1032 can be operable to produce output to the user and to allow and/or facilitate the user to provide input to WD 1010. The type of interaction can vary depending on the type of user interface equipment 1032 installed in WD 1010. For example, if WD 1010 is a smart phone, the interaction can be via a touch screen; if WD 1010 is a smart meter, the interaction can be through a screen that provides usage (*e*.*g*., the number of gallons used) or a speaker that provides an audible alert (*e*.*g*., if smoke is detected). User interface equipment 1032 can include input interfaces, devices and circuits, and output interfaces, devices and circuits. User interface equipment 1032 can be configured to allow and/or facilitate input of information into WD 1010 and is connected to processing circuitry 1020 to allow and/or facilitate processing circuitry 1020 to process the input information. User interface equipment 1032 can include, for example, a microphone, a proximity or other sensor, keys/buttons, a touch display, one or more cameras, a USB port, or other input circuitry. User interface equipment 1032 is also configured to allow and/or facilitate output of information from WD 1010, and to allow and/or facilitate processing circuitry 1020 to output information from WD 1010. User interface equipment 1032 can include, for example, a speaker, a display, vibrating circuitry, a USB port, a headphone interface, or other output circuitry. Using one or more input and output interfaces, devices, and circuits, of user interface equipment 1032, WD 1010 can communicate with end users and/or the wireless network and allow and/or facilitate them to benefit from the functionality described herein.

Auxiliary equipment 1034 is operable to provide more specific functionality which may not be generally performed by WDs. This can comprise specialized sensors for doing measurements for various purposes, interfaces for additional types of communication such as wired communications *etc.* The inclusion and type of components of auxiliary equipment 1034 can vary depending on the embodiment and/or scenario.

Power source 1036 can, in some embodiments, be in the form of a battery or battery pack. Other types of power sources, such as an external power source (*e*.*g*., an electricity outlet), photovoltaic devices or power cells, can also be used. WD 1010 can further comprise power circuitry 1037 for delivering power from power source 1036 to the various parts of WD 1010 which need power from power source 1036 to carry out any functionality described or indicated herein. Power circuitry 1037 can in certain embodiments comprise power management circuitry. Power circuitry 1037 can additionally or alternatively be operable to receive power from an external power source; in which case WD 1010 can be connectable to the external power source (such as an electricity outlet) via input circuitry or an interface such as an electrical power cable. Power circuitry 1037 can also in certain embodiments be operable to deliver power from an external power source to power source 1036. This can be, for example, for the charging of power source 1036. Power circuitry 1037 can perform any converting or other modification to the power from power source 1036 to make it suitable for supply to the respective components of WD 1010.

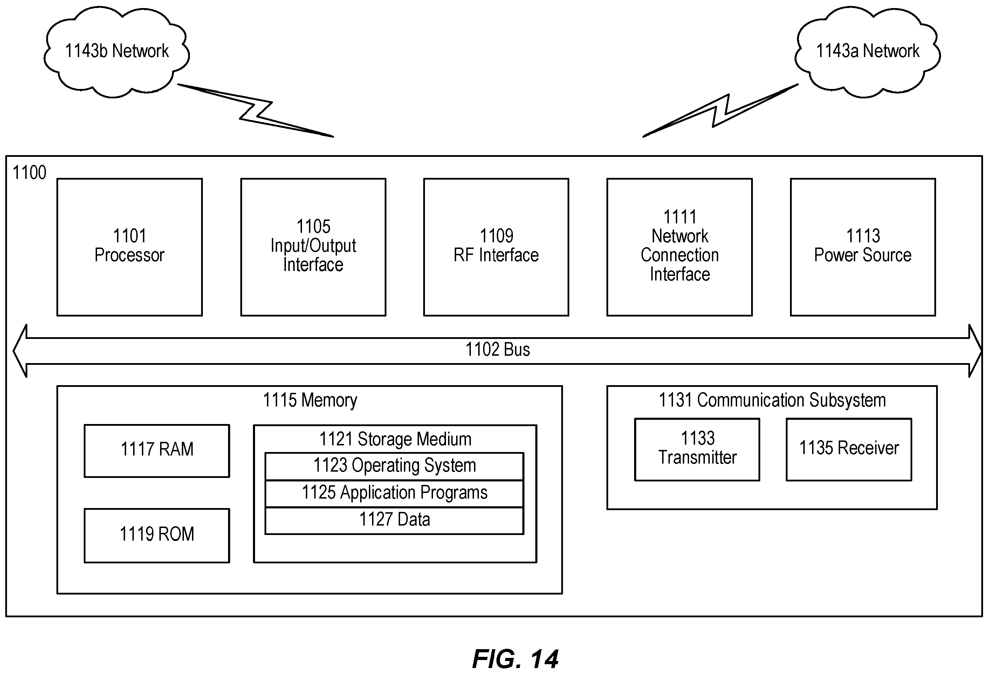

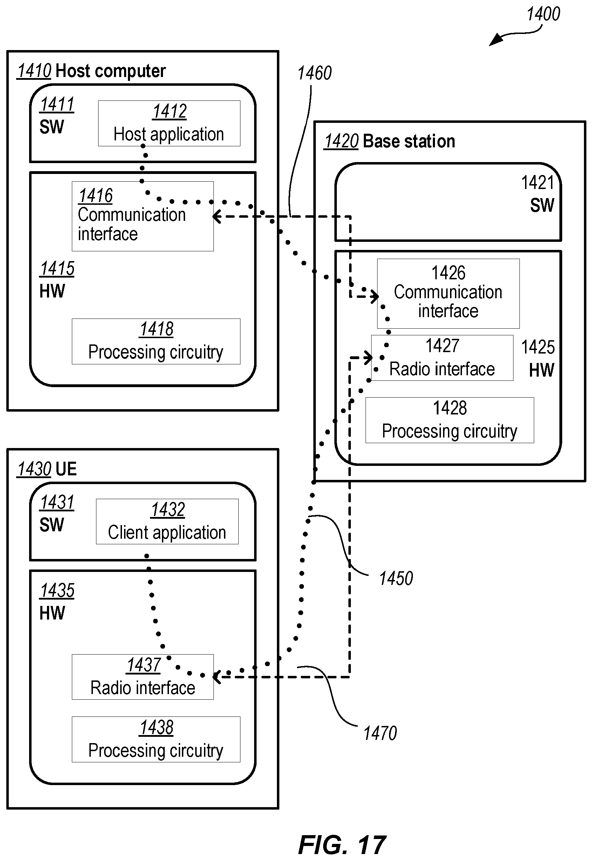

Figure 14 illustrates one embodiment of a UE in accordance with various aspects described herein. As used herein, a user equipment or UE may not necessarily have a user in the sense of a human user who owns and/or operates the relevant device. Instead, a UE can represent a device that is intended for sale to, or operation by, a human user but which may not, or which may not initially, be associated with a specific human user (*e*.*g*., a smart sprinkler controller). Alternatively, a UE can represent a device that is not intended for sale to, or operation by, an end user but which can be associated with or operated for the benefit of a user (*e*.*g*., a smart power meter). UE 1100 can be any UE identified by the 3^{rd} Generation Partnership Project (3GPP), including a NB-IoT UE, a machine type communication (MTC) UE, and/or an enhanced MTC (eMTC) UE. UE 1100, as illustrated in Figure 17, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE can be used interchangeable. Accordingly, although Figure 14 is a UE, the components discussed herein are equally applicable to a WD, and vice-versa.

In Figure 14, UE 1100 includes processing circuitry 1101 that is operatively coupled to input/output interface 1105, radio frequency (RF) interface 1109, network connection interface 1111, memory 1115 including random access memory (RAM) 1117, read-only memory (ROM) 1119, and storage medium 1121 or the like, communication subsystem 1131, power source 1133, and/or any other component, or any combination thereof. Storage medium 1121 includes operating system 1123, application program 1125, and data 1127. In other embodiments, storage medium 1121 can include other similar types of information. Certain UEs can utilize all of the components shown in Figure 17, or only a subset of the components. The level of integration between the components can vary from one UE to another UE. Further, certain UEs can contain multiple instances of a component, such as multiple processors, memories, transceivers, transmitters, receivers, *etc.*

In Figure 14, processing circuitry 1101 can be configured to process computer instructions and data. Processing circuitry 1101 can be configured to implement any sequential state machine operative to execute machine instructions stored as machine-readable computer programs in the memory, such as one or more hardware-implemented state machines (*e*.*g*., in discrete logic, FPGA, ASIC, *etc*.); programmable logic together with appropriate firmware; one or more stored program, general-purpose processors, such as a microprocessor or Digital Signal Processor (DSP), together with appropriate software; or any combination of the above. For example, the processing circuitry 1101 can include two central processing units (CPUs). Data can be information in a form suitable for use by a computer.

In the depicted embodiment, input/output interface 1105 can be configured to provide a communication interface to an input device, output device, or input and output device. UE 1100 can be configured to use an output device via input/output interface 1105. An output device can use the same type of interface port as an input device. For example, a USB port can be used to provide input to and output from UE 1100. The output device can be a speaker, a sound card, a video card, a display, a monitor, a printer, an actuator, an emitter, a smartcard, another output device, or any combination thereof. UE 1100 can be configured to use an input device via input/output interface 1105 to allow and/or facilitate a user to capture information into UE 1100. The input device can include a touch-sensitive or presence-sensitive display, a camera (*e*.*g*., a digital camera, a digital video camera, a web camera, *etc*.), a microphone, a sensor, a mouse, a trackball, a directional pad, a trackpad, a scroll wheel, a smartcard, and the like. The presence-sensitive display can include a capacitive or resistive touch sensor to sense input from a user. A sensor can be, for instance, an accelerometer, a gyroscope, a tilt sensor, a force sensor, a magnetometer, an optical sensor, a proximity sensor, another like sensor, or any combination thereof. For example, the input device can be an accelerometer, a magnetometer, a digital camera, a microphone, and an optical sensor.

In Figure 14, RF interface 1109 can be configured to provide a communication interface to RF components such as a transmitter, a receiver, and an antenna. Network connection interface 1111 can be configured to provide a communication interface to network 1143a. Network 1143a can encompass wired and/or wireless networks such as a local-area network (LAN), a wide-area network (WAN), a computer network, a wireless network, a telecommunications network, another like network or any combination thereof. For example, network 1143a can comprise a Wi-Fi network. Network connection interface 1111 can be configured to include a receiver and a transmitter interface used to communicate with one or more other devices over a communication network according to one or more communication protocols, such as Ethernet, TCP/IP, SONET, ATM, or the like. Network connection interface 1111 can implement receiver and transmitter functionality appropriate to the communication network links (*e*.*g*., optical, electrical, and the like). The transmitter and receiver functions can share circuit components, software or firmware, or alternatively can be implemented separately.

RAM 1117 can be configured to interface via bus 1102 to processing circuitry 1101 to provide storage or caching of data or computer instructions during the execution of software programs such as the operating system, application programs, and device drivers. ROM 1119 can be configured to provide computer instructions or data to processing circuitry 1101. For example, ROM 1119 can be configured to store invariant low-level system code or data for basic system functions such as basic input and output (I/O), startup, or reception of keystrokes from a keyboard that are stored in a non-volatile memory. Storage medium 1121 can be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives.

In one example, storage medium 1121 can be configured to include operating system 1123; application program 1125 such as a web browser application, a widget or gadget engine or another application; and data file 1127. Storage medium 1121 can store, for use by UE 1100, any of a variety of various operating systems or combinations of operating systems. For example, application program 1125 can include executable program instructions (also referred to as a computer program product) that, when executed by processor 1101, can configure UE 1100 to perform operations corresponding to various exemplary methods (*e*.*g*., procedures) described herein.

Storage medium 1121 can be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1121 can allow and/or facilitate UE 1100 to access computer-executable instructions, application programs or the like, stored on transitory or non-transitory memory media, to off-load data, or to upload data. An article of manufacture, such as one utilizing a communication system can be tangibly embodied in storage medium 1121, which can comprise a device readable medium.

In Figure 14, processing circuitry 1101 can be configured to communicate with network 1143b using communication subsystem 1131. Network 1143a and network 1143b can be the same network or networks or different network or networks. Communication subsystem 1131 can be configured to include one or more transceivers used to communicate with network 1143b. For example, communication subsystem 1131 can be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver can include transmitter 1133 and/or receiver 1135 to implement transmitter or receiver functionality, respectively, appropriate to the RAN links (*e*.*g*., frequency allocations and the like). Further, transmitter 1133 and receiver 1135 of each transceiver can share circuit components, software or firmware, or alternatively can be implemented separately.

In the illustrated embodiment, the communication functions of communication subsystem 1131 can include data communication, voice communication, multimedia communication, short-range communications such as Bluetooth, near-field communication, location-based communication such as the use of the global positioning system (GPS) to determine a location, another like communication function, or any combination thereof. For example, communication subsystem 1131 can include cellular communication, Wi-Fi communication, Bluetooth communication, and GPS communication. Network 1143b can encompass wired and/or wireless networks such as a local-area network (LAN), a wide-area network (WAN), a computer network, a wireless network, a telecommunications network, another like network or any combination thereof. For example, network 1143b can be a cellular network, a Wi-Fi network, and/or a near-field network. Power source 1113 can be configured to provide alternating current (AC) or direct current (DC) power to components of UE 1100.

The features, benefits and/or functions described herein can be implemented in one of the components of UE 1100 or partitioned across multiple components of UE 1100. Further, the features, benefits, and/or functions described herein can be implemented in any combination of hardware, software, or firmware. In one example, communication subsystem 1131 can be configured to include any of the components described herein. Further, processing circuitry 1101 can be configured to communicate with any of such components over bus 1102. In another example, any of such components can be represented by program instructions stored in memory that when executed by processing circuitry 1101 perform the corresponding functions described herein. In another example, the functionality of any of such components can be partitioned between processing circuitry 1101 and communication subsystem 1131. In another example, the non-computationally intensive functions of any of such components can be implemented in software or firmware and the computationally intensive functions can be implemented in hardware.

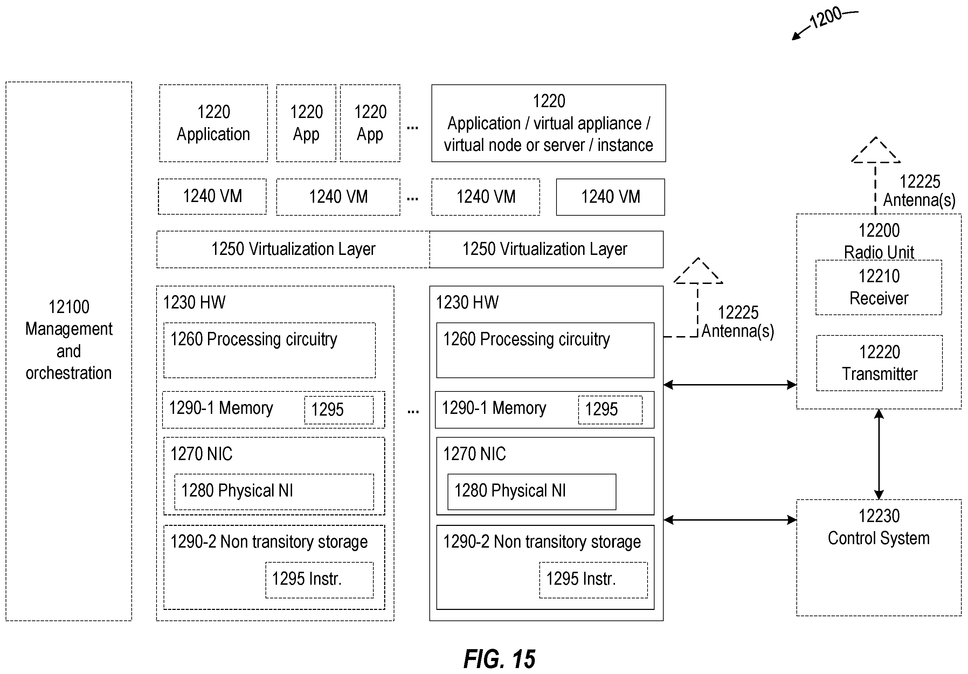

Figure 15 is a schematic block diagram illustrating a virtualization environment 1200 in which functions implemented by some embodiments can be virtualized. In the present context, virtualizing means creating virtual versions of apparatuses or devices which can include virtualizing hardware platforms, storage devices and networking resources. As used herein, virtualization can be applied to a node *(e.g.,* a virtualized base station or a virtualized radio access node) or to a device (*e*.*g*., a UE, a wireless device or any other type of communication device) or components thereof and relates to an implementation in which at least a portion of the functionality is implemented as one or more virtual components (*e*.*g*., via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 1200 hosted by one or more of hardware nodes 1230. Further, in embodiments in which the virtual node is not a radio access node or does not require radio connectivity (e.g., a core network node), then the network node can be entirely virtualized.

The functions can be implemented by one or more applications 1220 (which can alternatively be called software instances, virtual appliances, network functions, virtual nodes, virtual network functions, *etc*.) operative to implement some of the features, functions, and/or benefits of some of the embodiments disclosed herein. Applications 1220 are run in virtualization environment 1200 which provides hardware 1230 comprising processing circuitry 1260 and memory 1290. Memory 1290 contains instructions 1295 executable by processing circuitry 1260 whereby application 1220 is operative to provide one or more of the features, benefits, and/or functions disclosed herein.

Virtualization environment 1200 can include general-purpose or special-purpose network hardware devices (or nodes) 1230 comprising a set of one or more processors or processing circuitry 1260, which can be commercial off-the-shelf (COTS) processors, dedicated Application Specific Integrated Circuits (ASICs), or any other type of processing circuitry including digital or analog hardware components or special purpose processors. Each hardware device can comprise memory 1290-1 which can be non-persistent memory for temporarily storing instructions 1295 or software executed by processing circuitry 1260. For example, instructions 1295 can include program instructions (also referred to as a computer program product) that, when executed by processing circuitry 1260, can configure hardware node 1220 to perform operations corresponding to various exemplary methods (*e*.*g*., procedures) described herein. Such operations can also be attributed to virtual node(s) 1220 that is/are hosted by hardware node 1230.

Each hardware device can comprise one or more network interface controllers (NICs) 1270, also known as network interface cards, which include physical network interface 1280. Each hardware device can also include non-transitory, persistent, machine-readable storage media 1290-2 having stored therein software 1295 and/or instructions executable by processing circuitry 1260. Software 1295 can include any type of software including software for instantiating one or more virtualization layers 1250 (also referred to as hypervisors), software to execute virtual machines 1240 as well as software allowing it to execute functions, features and/or benefits described in relation with some embodiments described herein.

Virtual machines 1240, comprise virtual processing, virtual memory, virtual networking or interface and virtual storage, and can be run by a corresponding virtualization layer 1250 or hypervisor. Different embodiments of the instance of virtual appliance 1220 can be implemented on one or more of virtual machines 1240, and the implementations can be made in different ways.

During operation, processing circuitry 1260 executes software 1295 to instantiate the hypervisor or virtualization layer 1250, which can sometimes be referred to as a virtual machine monitor (VMM). Virtualization layer 1250 can present a virtual operating platform that appears like networking hardware to virtual machine 1240.

As shown in Figure 15, hardware 1230 can be a standalone network node with generic or specific components. Hardware 1230 can comprise antenna 12225 and can implement some functions via virtualization. Alternatively, hardware 1230 can be part of a larger cluster of hardware (*e*.*g*., such as in a data center or customer premise equipment (CPE)) where many hardware nodes work together and are managed via management and orchestration (MANO) 12100, which, among others, oversees lifecycle management of applications 1220.

Virtualization of the hardware is in some contexts referred to as network function virtualization (NFV). NFV can be used to consolidate many network equipment types onto industry standard high-volume server hardware, physical switches, and physical storage, which can be located in data centers, and customer premise equipment.

In the context of NFV, virtual machine 1240 can be a software implementation of a physical machine that runs programs as if they were executing on a physical, non-virtualized machine. Each of virtual machines 1240, and that part of hardware 1230 that executes that virtual machine, be it hardware dedicated to that virtual machine and/or hardware shared by that virtual machine with others of the virtual machines 1240, forms a separate virtual network elements (VNE).

Still in the context of NFV, Virtual Network Function (VNF) is responsible for handling specific network functions that run in one or more virtual machines 1240 on top of hardware networking infrastructure 1230 and corresponds to application 1220 in Figure 15.

In some embodiments, one or more radio units 12200 that each include one or more transmitters 12220 and one or more receivers 12210 can be coupled to one or more antennas 12225. Radio units 12200 can communicate directly with hardware nodes 1230 via one or more appropriate network interfaces and can be used in combination with the virtual components to provide a virtual node with radio capabilities, such as a radio access node or a base station. Nodes arranged in this manner can also communicate with one or more UEs, such as described elsewhere herein.

In some embodiments, some signaling can be performed via control system 12230, which can alternatively be used for communication between the hardware nodes 1230 and radio units 12200.

Furthermore, various network functions (NFs, e.g., UDM, AMF, AUSF, AAA-S, etc.) described herein can be implemented with and/or hosted by different variants of hardware 1230, including those variants described above.

With reference to Figure 16, in accordance with an embodiment, a communication system includes telecommunication network 1310, such as a 3GPP-type cellular network, which comprises access network 1311, such as a radio access network, and core network 1314. Access network 1311 comprises a plurality of base stations 1312a, 1312b, 1312c, such as NBs, eNBs, gNBs or other types of wireless access points, each defining a corresponding coverage area 1313a, 1313b, 1313c. Each base station 1312a, 1312b, 1312c is connectable to core network 1314 over a wired or wireless connection 1315. A first UE 1391 located in coverage area 1313c can be configured to wirelessly connect to, or be paged by, the corresponding base station 1312c. A second UE 1392 in coverage area 1313a is wirelessly connectable to the corresponding base station 1312a. While a plurality of UEs 1391, 1392 are illustrated in this example, the disclosed embodiments are equally applicable to a situation where a sole UE is in the coverage area or where a sole UE is connecting to the

Telecommunication network 1310 is itself connected to host computer 1330, which can be embodied in the hardware and/or software of a standalone server, a cloud-implemented server, a distributed server or as processing resources in a server farm. Host computer 1330 can be under the ownership or control of a service provider or can be operated by the service provider or on behalf of the service provider. Connections 1321 and 1322 between telecommunication network 1310 and host computer 1330 can extend directly from core network 1314 to host computer 1330 or can go via an optional intermediate network 1320. Intermediate network 1320 can be one of, or a combination of more than one of, a public, private or hosted network; intermediate network 1320, if any, can be a backbone network or the Internet; in particular, intermediate network 1320 can comprise two or more sub-networks (not shown).

The communication system of Figure 16 as a whole enables connectivity between the connected UEs 1391, 1392 and host computer 1330. The connectivity can be described as an over-the-top (OTT) connection 1350. Host computer 1330 and the connected UEs 1391, 1392 are configured to communicate data and/or signaling via OTT connection 1350, using access network 1311, core network 1314, any intermediate network 1320 and possible further infrastructure (not shown) as intermediaries. OTT connection 1350 can be transparent in the sense that the participating communication devices through which OTT connection 1350 passes are unaware of routing of uplink and downlink communications. For example, base station 1312 may not or need not be informed about the past routing of an incoming downlink communication with data originating from host computer 1330 to be forwarded (*e*.*g*., handed over) to a connected UE 1391. Similarly, base station 1312 need not be aware of the future routing of an outgoing uplink communication originating from the UE 1391 towards the host computer 1330.

Example implementations, in accordance with an embodiment, of the UE, base station and host computer discussed in the preceding paragraphs will now be described with reference to Figure 17. In communication system 1400, host computer 1410 comprises hardware 1415 including communication interface 1416 configured to set up and maintain a wired or wireless connection with an interface of a different communication device of communication system 1400. Host computer 1410 further comprises processing circuitry 1418, which can have storage and/or processing capabilities. In particular, processing circuitry 1418 can comprise one or more programmable processors, application-specific integrated circuits, field programmable gate arrays or combinations of these (not shown) adapted to execute instructions. Host computer 1410 further comprises software 1411, which is stored in or accessible by host computer 1410 and executable by processing circuitry 1418. Software 1411 includes host application 1412. Host application 1412 can be operable to provide a service to a remote user, such as UE 1430 connecting via OTT connection 1450 terminating at UE 1430 and host computer 1410. In providing the service to the remote user, host application 1412 can provide user data which is transmitted using OTT connection 1450.

Communication system 1400 can also include base station 1420 provided in a telecommunication system and comprising hardware 1425 enabling it to communicate with host computer 1410 and with UE 1430. Hardware 1425 can include communication interface 1426 for setting up and maintaining a wired or wireless connection with an interface of a different communication device of communication system 1400, as well as radio interface 1427 for setting up and maintaining at least wireless connection 1470 with UE 1430 located in a coverage area (not shown in Figure 17) served by base station 1420. Communication interface 1426 can be configured to facilitate connection 1460 to host computer 1410. Connection 1460 can be direct, or it can pass through a core network (not shown in Figure 17) of the telecommunication system and/or through one or more intermediate networks outside the telecommunication system. In the embodiment shown, hardware 1425 of base station 1420 can also include processing circuitry 1428, which can comprise one or more programmable processors, application-specific integrated circuits, field programmable gate arrays or combinations of these (not shown) adapted to execute instructions.

Base station 1420 also includes software 1421 stored internally or accessible via an external connection. For example, software 1421 can include program instructions (also referred to as a computer program product) that, when executed by processing circuitry 1428, can configure base station 1420 to perform operations corresponding to various exemplary methods (*e*.*g*., procedures) described herein.

Communication system 1400 can also include UE 1430 already referred to, whose hardware 1435 can include radio interface 1437 configured to set up and maintain wireless connection 1470 with a base station serving a coverage area in which UE 1430 is currently located. Hardware 1435 of UE 1430 can also include processing circuitry 1438, which can comprise one or more programmable processors, application-specific integrated circuits, field programmable gate arrays or combinations of these (not shown) adapted to execute instructions.

UE 1430 also includes software 1431, which is stored in or accessible by UE 1430 and executable by processing circuitry 1438. Software 1431 includes client application 1432. Client application 1432 can be operable to provide a service to a human or non-human user via UE 1430, with the support of host computer 1410. In host computer 1410, an executing host application 1412 can communicate with the executing client application 1432 via OTT connection 1450 terminating at UE 1430 and host computer 1410. In providing the service to the user, client application 1432 can receive request data from host application 1412 and provide user data in response to the request data. OTT connection 1450 can transfer both the request data and the user data. Client application 1432 can interact with the user to generate the user data that it provides. Software 1431 can also include program instructions (also referred to as a computer program product) that, when executed by processing circuitry 1438, can configure UE 1430 to perform operations corresponding to various exemplary methods (*e*.*g*., procedures) described herein.

As an example, host computer 1410, base station 1420 and UE 1430 illustrated in Figure 17 can be similar or identical to host computer 1330, one of base stations 1312a-c and one of UEs 1391-1392 of Figure 16, respectively. This is to say, the inner workings of these entities can be as shown in Figure 17 and independently, the surrounding network topology can be that shown in Figure 16.

In Figure 17, OTT connection 1450 has been drawn abstractly to illustrate the communication between host computer 1410 and UE 1430 via base station 1420, without explicit reference to any intermediary devices and the precise routing of messages via these devices. Network infrastructure can determine the routing, which it can be configured to hide from UE 1430 or from the service provider operating host computer 1410, or both. While OTT connection 1450 is active, the network infrastructure can further take decisions by which it dynamically changes the routing (*e*.*g*., on the basis of load balancing consideration or reconfiguration of the network).

Wireless connection 1470 between UE 1430 and base station 1420 is in accordance with the teachings of the embodiments described throughout this disclosure. One or more of the various embodiments improve the performance of OTT services provided to UE 1430 using OTT connection 1450, in which wireless connection 1470 forms the last segment. More precisely, the exemplary embodiments disclosed herein can improve flexibility for the network to monitor end-to-end quality-of-service (QoS) of data flows, including their corresponding radio bearers, associated with data sessions between a user equipment (UE) and another entity, such as an OTT data application or service external to the 5G network. These and other advantages can facilitate more timely design, implementation, and deployment of 5G/NR solutions. Furthermore, such embodiments can facilitate flexible and timely control of data session QoS, which can lead to improvements in capacity, throughput, latency, *etc*. that are envisioned by 5G/NR and important for the growth of OTT services.

A measurement procedure can be provided for the purpose of monitoring data rate, latency and other network operational aspects on which the one or more embodiments improve. There can further be an optional network functionality for reconfiguring OTT connection 1450 between host computer 1410 and UE 1430, in response to variations in the measurement results. The measurement procedure and/or the network functionality for reconfiguring OTT connection 1450 can be implemented in software 1411 and hardware 1415 of host computer 1410 or in software 1431 and hardware 1435 of UE 1430, or both. In embodiments, sensors (not shown) can be deployed in or in association with communication devices through which OTT connection 1450 passes; the sensors can participate in the measurement procedure by supplying values of the monitored quantities exemplified above, or supplying values of other physical quantities from which software 1411, 1431 can compute or estimate the monitored quantities. The reconfiguring of OTT connection 1450 can include message format, retransmission settings, preferred routing *etc*.; the reconfiguring need not affect base station 1420, and it can be unknown or imperceptible to base station 1420. Such procedures and functionalities can be known and practiced in the art. In certain embodiments, measurements can involve proprietary UE signaling facilitating host computer 1410's measurements of throughput, propagation times, latency and the like. The measurements can be implemented in that software 1411 and 1431 causes messages to be transmitted, in particular empty or 'dummy' messages, using OTT connection 1450 while it monitors propagation times, errors, *etc*.

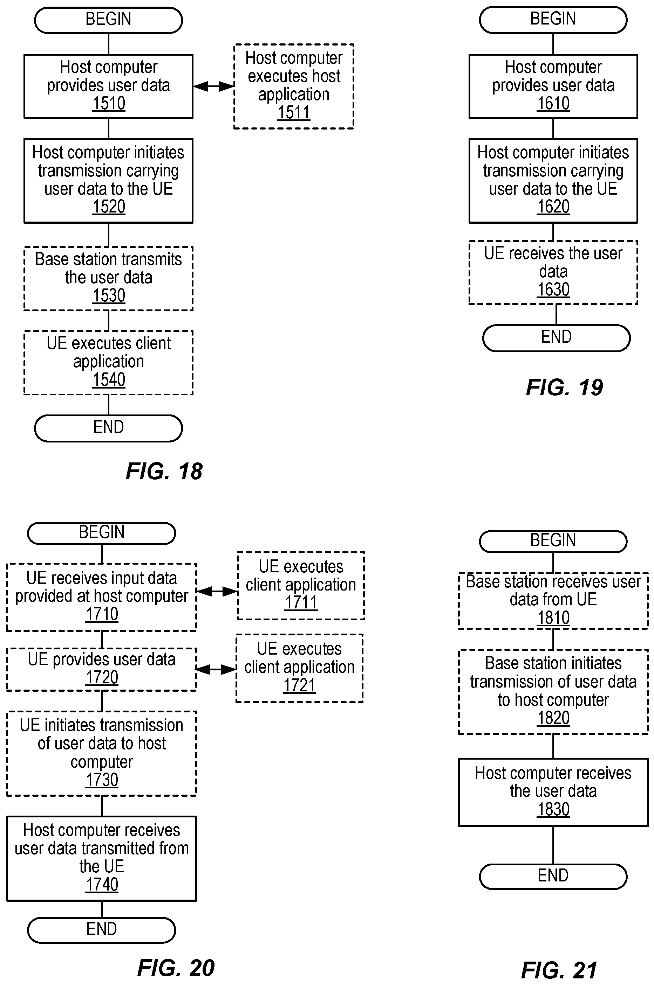

Figure 18 is a flowchart illustrating an exemplary method and/or procedure implemented in a communication system, in accordance with one embodiment. The communication system includes a host computer, a base station and a UE which, in some exemplary embodiments, can be those described with reference to other figures herein. For simplicity of the present disclosure, only drawing references to Figure 18 will be included in this section. In step 1510, the host computer provides user data. In substep 1511 (which can be optional) of step 1510, the host computer provides the user data by executing a host application. In step 1520, the host computer initiates a transmission carrying the user data to the UE. In step 1530 (which can be optional), the base station transmits to the UE the user data which was carried in the transmission that the host computer initiated, in accordance with the teachings of the embodiments described throughout this disclosure. In step 1540 (which can also be optional), the UE executes a client application associated with the host application executed by the host computer.

Figure 19 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 16 will be included in this section. In step 1610 of the method, the host computer provides user data. In an optional substep (not shown) the host computer provides the user data by executing a host application. In step 1620, the host computer initiates a transmission carrying the user data to the UE. The transmission can pass via the base station, in accordance with the teachings of the embodiments described throughout this disclosure. In step 1630 (which can be optional), the UE receives the user data carried in the transmission.

Figure 20 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 20 will be included in this section. In step 1710 (which can be optional), the UE receives input data provided by the host computer. Additionally or alternatively, in step 1720, the UE provides user data. In substep 1721 (which can be optional) of step 1720, the UE provides the user data by executing a client application. In substep 1711 (which can be optional) of step 1710, the UE executes a client application which provides the user data in reaction to the received input data provided by the host computer. In providing the user data, the executed client application can further consider user input received from the user. Regardless of the specific manner in which the user data was provided, the UE initiates, in substep 1730 (which can be optional), transmission of the user data to the host computer. In step 1740 of the method, the host computer receives the user data transmitted from the UE, in accordance with the teachings of the embodiments described throughout this disclosure.

Figure 21 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 21 will be included in this section. In step 1810 (which can be optional), in accordance with the teachings of the embodiments described throughout this disclosure, the base station receives user data from the UE. In step 1820 (which can be optional), the base station initiates transmission of the received user data to the host computer. In step 1830 (which can be optional), the host computer receives the user data carried in the transmission initiated by the base station.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Furthermore, functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and exemplary embodiments thereof, can be used synonymously in certain instances, including, but not limited to, *e*.*g*., data and information. It should be understood that, while these words and/or other words that can be synonymous to one another, can be used synonymously herein, that there can be instances when such words can be intended to not be used synonymously.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various exemplary embodiments can be used together with one another, as well as interchangeably therewith, as should be understood by those having ordinary skill in the art.

## Claims

1. A method for authenticating a wireless communications device to a network slice of a communications network, the wireless communications device having one or more attributes associated with it, at least one of the one or more attributes fulfilling an attribute-based access policy of the network slice, the method being performed by a slice manager of the communications network and comprising:
sending a secret key to the wireless communications device, wherein the secret key is encrypted using attribute-based encryption; and
sending an encrypted access key to the wireless communications device, the encrypted access key being encrypted using the attribute-based access policy, such that a secret key generated based on at least one attribute that fulfils the attribute-based access policy can decrypt the encrypted access key;
wherein the network slice is a dynamically created network slice or a temporary network slice.

2. The method according to claim 1, further comprising:
generating the secret key using the one or more attributes associated with the wireless communication device.

3. The method according to any of claims 1 and 2, further comprising:
generating the access key; and
encrypting the access key using the attribute-based access policy.

4. The method according to claim 3, wherein the access key is generated in response the network slice being created.

5. The method according to any of claims 1-4, further comprising:
determining an attribute-based access policy for the network slice.

6. The method according to any of claims 1-5, further comprising
receiving a request from the wireless communications device for the secret key.

7. The method according to claim 6, wherein the request comprises the one or more attributes associated with the wireless communications device.

8. The method according to claim 6, further comprising:
verifying that the one or more attributes associated with the wireless communications device originate from a trusted application of the wireless communications device.

9. The method according to any of claims 1-8, further comprising:
generating a secret master key and a corresponding public key for the slice manager;
wherein the secret key is generated using the secret master key and the one or more attributes associated with the wireless communications device,
and wherein the public key is available to the wireless communications devices.

10. The method according to any of claims 1-9, further comprising:
sending a device-specific secret key to each of a plurality of wireless communications devices, each of the plurality of wireless communications devices having one or more attributes associated with it, wherein each device-specific secret key is generated based on the one or more attributes associated with each wireless communications device, and
sending an encrypted access key to the plurality of wireless communications devices, the encrypted access key being encrypted using the access policy, such that a device-specific secret key generated based on at least one attribute that fulfil the attribute-based access policy can decrypt the encrypted access key.

11. A method performed by a wireless communications device, for authenticating the wireless communications device to a network slice of a communications network, the wireless communications device having one or more attributes associated with it, at least one of the one or more attributes fulfilling an attribute-based access policy of the network slice, the method comprising:
receiving a secret key generated based on the one or more attributes wherein the secret key is encrypted using attribute-based encryption;
receiving an encrypted access key for the network slice, the encrypted access key being encrypted using the attribute-based access policy such that a secret key generated based on at least one attribute that fulfils the attribute-based access policy can decrypt the encrypted access key;
decrypting the encrypted access key using the secret key to obtain the access key; and
authenticating the wireless communications device to the network slice using the access key;
wherein the network slice is a dynamically created network slice or a temporary network slice.

12. The method according to claim11, wherein the method further comprises receiving a notification to authenticate to the network slice and an identifier of the network slice.

13. The method according to any one of claims 11 to 12, further comprising:
establishing a secure connection with a slice manager of the communications network,
wherein the secret key is received from the slice manager using the secure connection.

14. A slice manager for authentication of a first wireless communications device to a network slice, the slice manager comprising:
a processor; and
a memory coupled to the processor, wherein the memory stores instructions that when executed by the processor causes the processor to perform operations according to any of claims 1 to 10.

15. A wireless communications device for authenticating to a network slice of a communications network, the wireless communications device comprising:
a processor; and
a memory coupled to the processor, wherein the memory stores instructions that when executed by the processor cause the processor to perform operations according to any of claims 11 to 13.

## Patentansprüche

1. Verfahren zur Authentifizierung einer drahtlosen Kommunikationsvorrichtung gegenüber einem Netzwerk-Slice eines Kommunikationsnetzwerks, wobei die drahtlose Kommunikationsvorrichtung ein oder mehrere Attribute aufweist, die mit ihr assoziiert sind, wobei mindestens eines des einen oder der mehreren Attribute eine attributbasierte Zugangsrichtlinie des Netzwerk-Slices erfüllt, wobei das Verfahren von einem Slice-Verwalter des Kommunikationsnetzwerks durchgeführt wird und Folgendes umfasst:
Senden eines Geheimschlüssels an die drahtlose Kommunikationsvorrichtung, wobei der Geheimschlüssel unter Verwendung attributbasierter Verschlüsselung verschlüsselt ist; und
Senden eines verschlüsselten Zugangsschlüssels an die drahtlose Kommunikationsvorrichtung, wobei der verschlüsselte Zugangsschlüssel unter Verwendung der attributbasierten Zugangsrichtlinie verschlüsselt ist, derart dass ein Geheimschlüssel, der basierend auf mindestens einem Attribut erzeugt wird, das die attributbasierte Zugangsrichtlinie erfüllt, den verschlüsselten Zugangsschlüssel entschlüsseln kann;
wobei der Netzwerk-Slice ein dynamisch erstellter Netzwerk-Slice oder ein temporärer Netzwerk-Slice ist.

2. Verfahren nach Anspruch 1, ferner umfassend:
Erzeugen des Geheimschlüssels unter Verwendung des einen oder der mehreren Attribute, die mit der drahtlosen Kommunikationsvorrichtung assoziiert sind.

3. Verfahren nach einem der Ansprüche 1 und 2, ferner umfassend:
Erzeugen des Zugangsschlüssels; und
Verschlüsseln des Zugangsschlüssels unter Verwendung der attributbasierten Zugangsrichtlinie.

4. Verfahren nach Anspruch 3, wobei der Zugangsschlüssel in Reaktion darauf erzeugt wird, dass der Netzwerk-Slice erstellt wird.

5. Verfahren nach einem der Ansprüche 1-4, ferner umfassend:
Bestimmen einer attributbasierten Zugangsrichtlinie für den Netzwerk-Slice.

6. Verfahren nach einem der Ansprüche 1-5, ferner umfassend:
Empfangen einer Anforderung von der drahtlosen Kommunikationsvorrichtung für den Geheimschlüssel.

7. Verfahren nach Anspruch 6, wobei die Anforderung das eine oder die mehreren Attribute umfasst, die mit der drahtlosen Kommunikationsvorrichtung assoziiert sind.

8. Verfahren nach Anspruch 6, ferner umfassend:
Verifizieren, dass das eine oder die mehreren Attribute, die mit der drahtlosen Kommunikationsvorrichtung assoziiert sind, von einer vertrauenswürdigen Anwendung der drahtlosen Kommunikationsvorrichtung stammen.

9. Verfahren nach einem der Ansprüche 1-8, ferner umfassend:
Erzeugen eines Master-Geheimschlüssels und eines entsprechenden öffentlichen Schlüssels für den Slice-Verwalter;
wobei der Geheimschlüssel unter Verwendung des Master-Geheimschlüssels und des einen oder der mehreren Attribute erzeugt wird, die mit der drahtlosen Kommunikationsvorrichtung assoziiert sind,
und wobei der öffentliche Schlüssel für die drahtlosen Kommunikationsvorrichtungen verfügbar ist.

10. Verfahren nach einem der Ansprüche 1-9, ferner umfassend:
Senden eines vorrichtungsspezifischen Geheimschlüssels an jede einer Mehrzahl von drahtlosen Kommunikationsvorrichtungen, wobei jede der drahtlosen Kommunikationsvorrichtungen ein oder mehrere Attribute aufweist, die mit ihr assoziiert sind, wobei jeder vorrichtungsspezifische Geheimschlüssel basierend auf dem einen oder den mehreren Attributen erzeugt wird, die mit jeder drahtlosen Kommunikationsvorrichtung assoziiert sind, und
Senden eines verschlüsselten Zugangsschlüssels an die Mehrzahl von drahtlosen Kommunikationsvorrichtungen, wobei der verschlüsselte Zugangsschlüssel unter Verwendung der Zugangsrichtlinie verschlüsselt ist, derart dass ein vorrichtungsspezifischer Geheimschlüssel, der basierend auf mindestens einem Attribut erzeugt wird, das die attributbasierte Zugangsrichtlinie erfüllt, den verschlüsselten Zugangsschlüssel entschlüsseln kann.

11. Verfahren, das von einer drahtlosen Kommunikationsvorrichtung durchgeführt wird, zur Authentifizierung der drahtlosen Kommunikationsvorrichtung gegenüber einem Netzwerk-Slice eines Kommunikationsnetzwerks, wobei die drahtlose Kommunikationsvorrichtung ein oder mehrere Attribute aufweist, die mit ihr assoziiert sind, wobei mindestens eines des einen oder der mehreren Attribute eine attributbasierte Zugangsrichtlinie des Netzwerk-Slices erfüllt, wobei das Verfahren Folgendes umfasst:
Empfangen eines basierend auf dem einen oder den mehreren Attributen erzeugten Geheimschlüssels, wobei der Geheimschlüssel unter Verwendung attributbasierter Verschlüsselung verschlüsselt ist;
Empfangen eines verschlüsselten Zugangsschlüssels für den Netzwerk-Slice, wobei der verschlüsselte Zugangsschlüssel unter Verwendung der attributbasierten Zugangsrichtlinie verschlüsselt ist, derart dass ein Geheimschlüssel, der basierend auf mindestens einem Attribut erzeugt wird, das die attributbasierte Zugangsrichtlinie erfüllt, den verschlüsselten Zugangsschlüssel entschlüsseln kann;
Entschlüsseln des verschlüsselten Zugangsschlüssels unter Verwendung des Geheimschlüssels, um den Zugangsschlüssel zu erhalten; und
Authentifizieren der drahtlosen Kommunikationsvorrichtung gegenüber dem Netzwerk-Slice unter Verwendung des Zugangsschlüssels;
wobei der Netzwerk-Slice ein dynamisch erstellter Netzwerk-Slice oder ein temporärer Netzwerk-Slice ist.

12. Verfahren nach Anspruch 11, wobei das Verfahren ferner Empfangen einer Benachrichtigung zur Authentifizierung gegenüber dem Netzwerk-Slice und einer Kennung des Netzwerk-Slices umfasst.

13. Verfahren nach einem der Ansprüche 11 bis 12, ferner umfassend:
Herstellen einer sicheren Verbindung mit einem Slice-Verwalter des Kommunikationsnetzwerks,
wobei der Geheimschlüssel von dem Slice-Verwalter unter Verwendung der sicheren Verbindung empfangen wird.

14. Slice-Verwalter zur Authentifizierung einer ersten drahtlosen Kommunikationsvorrichtung gegenüber einem Netzwerk-Slice, wobei der Slice-Verwalter Folgendes umfasst:
einen Prozessor; und
einen Speicher, der mit der Prozessor gekoppelt ist, wobei der Speicher Anweisungen speichert, die bei Ausführung durch den Prozessor den Prozessor zum Durchführen von Operationen nach einem der Ansprüche 1 bis 10 veranlassen.

15. Drahtlose Kommunikationsvorrichtung zur Authentifizierung gegenüber einem Netzwerk-Slice eines Kommunikationsnetzwerks, wobei die drahtlose Kommunikationsvorrichtung Folgendes umfasst:
einen Prozessor; und
einen Speicher, der mit der Prozessor gekoppelt ist, wobei der Speicher Anweisungen speichert, die bei Ausführung durch den Prozessor den Prozessor zum Durchführen von Operationen nach einem der Ansprüche 11 bis 13 veranlassen.

## Revendications

1. Procédé d'authentification d'un dispositif de communication sans fil auprès d'une tranche de réseau d'un réseau de communication, le dispositif de communication sans fil présentant un ou plusieurs attributs qui lui sont associés, au moins l'un des un ou plusieurs attributs respectant une politique d'accès à base d'attribut de la tranche de réseau, le procédé étant réalisé par un gestionnaire de tranche du réseau de communication et comprenant :
l'envoi d'une clé secrète au dispositif de communication sans fil, dans lequel la clé secrète est chiffrée à l'aide d'un chiffrement à base d'attribut ; et
l'envoi d'une clé d'accès chiffrée au dispositif de communication sans fil, la clé d'accès chiffrée étant chiffrée à l'aide de la politique d'accès à base d'attribut, de sorte qu'une clé secrète générée sur la base d'au moins un attribut qui respecte la politique d'accès à base d'attribut puisse déchiffrer la clé d'accès chiffrée ;
dans lequel la tranche de réseau est une tranche de réseau créée dynamiquement ou une tranche de réseau temporaire.

2. Procédé selon la revendication 1, comprenant en outre :
la génération de la clé secrète à l'aide des un ou plusieurs attributs associés au dispositif de communication sans fil

3. Procédé selon l'une quelconque des revendications 1 et 2, comprenant en outre :
la génération de la clé d'accès ; et
le chiffrement de la clé d'accès à l'aide de la politique d'accès à base d'attribut.

4. Procédé selon la revendication 3, dans lequel la clé d'accès est générée en réponse à la création de la tranche de réseau.

5. Procédé selon l'une quelconque des revendications 1 à 4, comprenant en outre :
la détermination d'une politique d'accès à base d'attribut pour la tranche de réseau.

6. Procédé selon l'une quelconque des revendications 1 à 5, comprenant en outre :
la réception d'une demande depuis le dispositif de communication sans fil pour la clé secrète.

7. Procédé selon la revendication 6, dans lequel la demande comprend les un ou plusieurs attributs associés au dispositif de communication sans fil.

8. Procédé selon la revendication 6, comprenant en outre :
la vérification que les un ou plusieurs attributs associés au dispositif de communication sans fil proviennent d'une application de confiance du dispositif de communication sans fil.

9. Procédé selon l'une quelconque des revendications 1 à 8, comprenant en outre :
la génération d'une clé principale secrète et d'une clé publique correspondante pour le gestionnaire de tranche ;
dans lequel la clé secrète est générée à l'aide de la clé principale secrète et des un ou plusieurs attributs associés au dispositif de communication sans fil,
et dans lequel la clé publique est disponible pour les dispositifs de communication sans fil.

10. Procédé selon l'une quelconque des revendications 1 à 9, comprenant en outre :
l'envoi d'une clé secrète spécifique au dispositif à chacun d'une pluralité de dispositifs de communication sans fil, chacun de la pluralité de dispositifs de communication sans fil présentant un ou plusieurs attributs qui lui sont associés, dans lequel chaque clé secrète spécifique au dispositif est générée sur la base des un ou plusieurs attributs associés au dispositif de communication sans fil, et
l'envoi d'une clé d'accès chiffrée à la pluralité de dispositifs de communication sans fil, la clé d'accès chiffrée étant chiffrée à l'aide de la politique d'accès, de sorte qu'une clé secrète spécifique au dispositif générée sur la base d'au moins un attribut qui respecte la politique d'accès à base d'attribut puisse déchiffrer la clé d'accès chiffrée.

11. Procédé réalisé par un dispositif de communication sans fil pour authentifier le dispositif de communication sans fil auprès d'une tranche de réseau d'un réseau de communication, le dispositif de communication sans fil présentant un ou plusieurs attributs qui lui sont associés, au moins l'un des un ou plusieurs attributs respectant une politique d'accès à base d'attribut de la tranche de réseau, le procédé comprenant :
la réception d'une clé secrète générée sur la base des un ou plusieurs attributs, dans lequel la clé secrète est chiffrée à l'aide d'un chiffrement à base d'attribut ;
la réception d'une clé d'accès chiffrée pour la tranche de réseau, la clé d'accès chiffrée étant chiffrée à l'aide de la politique d'accès à base d'attribut de sorte qu'une clé secrète générée sur la base d'au moins un attribut qui respecte la politique d'accès à base d'attribut puisse déchiffrer la clé d'accès chiffrée ;
le déchiffrement de la clé d'accès chiffrée à l'aide de la clé secrète pour obtenir la clé d'accès ; et
l'authentification du dispositif de communication sans fil auprès de la tranche de réseau à l'aide de la clé d'accès ;
dans lequel la tranche de réseau est une tranche de réseau créée dynamiquement ou une tranche de réseau temporaire.

12. Procédé selon la revendication 11, dans lequel le procédé comprend en outre la réception d'une notification d'authentification auprès de la tranche de réseau et d'un identifiant de la tranche de réseau.

13. Procédé selon l'une quelconque des revendications 11 et 12, comprenant en outre :
l'établissement d'une connexion sécurisée avec un gestionnaire de tranche du réseau de communication,
dans lequel la clé secrète est reçue depuis le gestionnaire de tranche à l'aide de la connexion sécurisée.

14. Gestionnaire de tranche pour une authentification d'un premier dispositif de communication sans fil auprès d'une tranche de réseau, le gestionnaire de tranche comprenant :
un processeur ; et
une mémoire couplée au processeur, dans lequel la mémoire stocke des instructions qui, lorsqu'elles sont exécutées par le processeur, amènent le processeur à réaliser des opérations selon l'une quelconque des revendications 1 à 10.

15. Dispositif de communication sans fil pour s'authentifier auprès d'une tranche de réseau d'un réseau de communication, le dispositif de communication sans fil comprenant :
un processeur ; et
une mémoire couplée au processeur, dans lequel la mémoire stocke des instructions qui, lorsqu'elles sont exécutées par le processeur, amènent le processeur à réaliser des opérations selon l'une quelconque des revendications 11 à 13.
